(19) Europäisches Patentamt
European Patent Office
Office européen des brevets

(11) **EP 4 665 011 A1**

(12) **EUROPEAN PATENT APPLICATION**
published in accordance with Art. 153(4) EPC

(43) Date of publication:
**17.12.2025 Bulletin 2025/51**

(21) Application number: **24756079.0**

(22) Date of filing: **04.02.2024**

(51) International Patent Classification (IPC):
**H04W 52/24** (2009.01)     **H04W 52/00** (2009.01)

(52) Cooperative Patent Classification (CPC):
**H04W 52/00; H04W 52/24; H04W 52/36;
H04W 72/044; H04W 72/541**

(86) International application number:
**PCT/CN2024/075842**

(87) International publication number:
**WO 2024/169705 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310182954**

(71) Applicant: **Huawei Technologies Co., Ltd.
Shenzhen, Guangdong 518129 (CN)**

(72) Inventors:
• **HOU, Hailong
Shenzhen, Guangdong 518129 (CN)**
• **GUO, Zhiheng
Shenzhen, Guangdong 518129 (CN)**
• **LU, Shaozhong
Shenzhen, Guangdong 518129 (CN)**
• **SONG, Xinghua
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57)     A communication method and apparatus are provided, and relate to the field of communication technologies, so as to reduce impact of an interfering terminal device on an interfered terminal device, and ensure normal operation of the interfered terminal device. The method may include: A first terminal device receives first indication information from a first network device, and sends an SRS based on transmit power determined based on the first indication information, where the first indication information includes path loss information associated with the sounding reference signal SRS, and the path loss information is used by the first terminal device to determine the transmit power of the SRS, or the first indication information includes the transmit power of the SRS.

First network device

First terminal device

901: Generate first indication information

902: Send the first indication information

903: Send an SRS based on the first indication information

FIG. 9

## Description

This application claims priority to Chinese Patent Application No. 202310182954.8, filed with the China National Intellectual Property Administration on February 17, 2023 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

In a communication system, when a network device communicates with a terminal device, cross link interference (cross link interference, CLI) may exist between an uplink and a downlink due to signal power leakage. For example, when a terminal device (that is, an interfering terminal device) sends an uplink signal to the network device, a downlink signal received by another terminal device (that is, an interfered terminal device) may be interfered with due to signal power leakage.

The interfering device may send a sounding reference signal (sounding reference signal, SRS) based on a downlink reference signal sent by the network device, and the interfered terminal device may perform CLI measurement on the SRS sent by the interfering terminal device, to obtain a CLI measurement result, and report the CLI measurement result to the network device.

When the interfering terminal device is located at a cell edge, a path loss between the interfering terminal device and the network device is large. Consequently, transmit power of the SRS determined by the interfering terminal device may be large, or even reach maximum transmit power of the terminal device. If the interfered terminal device is close to the interfering terminal device, the interfered terminal device may be directly blocked due to large receive power of the SRS, and cannot operate normally. Therefore, how to reduce impact of the interfering terminal device on the interfered terminal device and ensure normal operation of the interfered terminal device becomes a technical problem to be urgently resolved.

## SUMMARY

Embodiments of this application provide a communication method and apparatus, to reduce impact of an interfering terminal device on an interfered terminal device, and ensure normal operation of the interfered terminal device.

According to a first aspect, an embodiment of this application provides a communication method. The method includes: A first terminal device receives first indication information from a first network device, and sends an SRS based on transmit power determined based on the first indication information, where the first indication information includes path loss information associated with the sounding reference signal SRS, and the path loss information is used by the first terminal device to determine the transmit power of the SRS, or the first indication information includes the transmit power of the SRS.

Based on the first aspect, compared with a manner in which the first terminal device determines transmit power of the SRS based on a downlink reference signal sent by the first network device, a manner of determining the transmit power of the SRS based on the first indication information sent by the first network device can reduce the transmit power of the SRS, thereby reducing impact of an interfering terminal device on an interfered terminal device, ensuring normal operation of the interfered terminal device, enabling CLI measurement between terminal devices, and improving system performance and efficiency.

For example, if the first terminal device is far away from the first network device, a path loss value determined by the first terminal device based on the downlink reference signal is large, and consequently, transmit power of the SRS determined based on the path loss value is large. A manner of determining the transmit power of the SRS based on the first indication information sent by the first network device can reduce the transmit power of the SRS.

In a possible design, the path loss information includes a path loss value; or the path loss information includes a path loss value range; or the path loss information includes an index of a path loss value; or the path loss information includes an index of a path loss value range.

Based on the possible design, a plurality of feasible solutions are provided for designing the path loss information.

In a possible design, the first terminal device sends second indication information to the first network device, where the second indication information includes a power headroom report of an SRS transmission occasion $m$, and $m$ is an integer.

In a possible design, the power headroom report of the SRS transmission occasion $m$ is used to determine path loss information associated with transmit power of an SRS transmission occasion $n$; or the power headroom report of the SRS transmission occasion $m$ is used to determine transmit power of an SRS transmission occasion $n$, where $n$ is an integer, and $n$ is greater than $m$.

Based on the foregoing two possible designs, the first terminal device reports the power headroom report to the first network device, so that the first network device can determine the first indication information based on the power headroom report. This provides a feasible solution for the first network device to determine the first indication information.

In a possible design, the first terminal device receives first maximum transmit power and/or second maximum transmit power from the first network device, where the first maximum transmit power and/or the second maximum transmit power are/is used to determine maximum output power of the first terminal device, and the first maximum transmit power and the second maximum transmit power are associated with a same carrier of a same cell.

In a possible design, the first terminal device receives the first maximum transmit power from the first network device, and the first terminal device determines the maximum output power based on the first maximum transmit power; or the first terminal device receives the first maximum transmit power and the second maximum transmit power from the first network device, and the first terminal device determines the maximum output power based on the first maximum transmit power and the second maximum transmit power; or the first terminal device receives the first maximum transmit power and the second maximum transmit power from the first network device, and the first terminal device determines the maximum output power based on the first maximum transmit power.

In a possible design, the first maximum transmit power is less than the second maximum transmit power, and the second maximum transmit power is located in an uplink frequency information signaling unit.

Based on the foregoing three possible designs, the additional first maximum transmit power is introduced based on the second maximum transmit power, so that the second terminal device can be prevented from being blocked due to the SRS initially sent by the first terminal device.

In a possible design, the first indication information is located in one or more of the following signaling: system information block SIB signaling, radio resource control RRC signaling, medium access control control element MAC CE signaling, or downlink control information DCI signaling.

Based on the possible design, the first network device may semi-statically indicate the first indication information by using higher layer signaling such as the RRC signaling or the MAC CE signaling, or may dynamically indicate the first indication information by using the DCI, to provide a plurality of feasible solutions for designing the first indication information.

In a possible design, the transmit power of the SRS transmission occasion $n$ meets:

$$P_{SRS,b,f,c}\left(n,q_{s},l\right)=min\left\{\begin{array}{c} P_{CMAX,f,c}\left(n\right)\\ P_{O\_SRS,b,f,c}\left(q_{s}\right)+10\,log_{10}\left(2^{\mu}\cdot M_{SRS,b,f,c}\left(n\right)\right)+\alpha_{SRS,b,f,c}\left(q_{s}\right)\cdot PL_{b,f,c}\left(q_{d}\right)+h_{b,f,c}\left(n,l\right)\end{array}\right\},$$

where

$n$ is an integer, $P_{SRS,b,f,c}(n,q_{s},l)$ represents the transmit power of the SRS transmission occasion $n$, $min$ represents a minimum value, $P_{CMAX,f,c}(n)$ represents the maximum output power, $P_{O\_SRS,b,f,c}(q_{s})$ represents expected receive power on an active uplink bandwidth part $b$ of a carrier $f$ of a serving cell $c$, $q_{s}$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell $c$, $\alpha_{SRS,b,f,c}(q_{s})$ represents a path loss compensation coefficient on the active uplink bandwidth part $b$ of the carrier $f$ of the serving cell $c$, $PL_{b,f,c}(q_{d})$ represents the path loss information, and $h_{b,f,c}(n,l)$ represents a power control adjustment state associated with the SRS, where a value of the power control adjustment state is 0.

Based on the possible design, because the first network device may directly indicate, to the first terminal device, the transmit power of the SRS transmission occasion $n$ or the path loss information associated with the transmit power of the SRS transmission occasion $n$, the first network device may not need to indicate the power control adjustment state to the first terminal device, to reduce signaling overheads. In other words, the value of the power control adjustment state associated with the SRS may be 0.

In a possible design, the transmit power of the SRS transmission occasion $n$ meets:

$$P_{SRS,b,f,c}\left(n,q_{s},l\right)=min\left\{\begin{array}{c} P_{CMAX,f,c}\left(n\right)\\ P_{O\_SRS,b,f,c}\left(q_{s}\right)+10\,log_{10}\left(2^{\mu}\cdot M_{SRS,b,f,c}\left(n\right)\right)+\alpha_{SRS,b,f,c}\left(q_{s}\right)\cdot PL_{b,f,c}\left(q_{d}\right)\end{array}\right\},$$

where

$n$ is an integer, $P_{SRS,b,f,c}(n,q_{s},l)$ represents the transmit power of the SRS transmission occasion $n$, $min$ represents a minimum value, $P_{CMAX,f,c}(n)$ represents the maximum output power, $P_{O\_SRS,b,f,c}(q_{s})$ represents expected receive power on an active uplink bandwidth part $b$ of a carrier $f$ of a serving cell $c$, $q_{s}$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell c, $\alpha_{SRS,b,f,c}(q_s)$ represents a path loss compensation coefficient on the active uplink bandwidth part $b$ of the carrier $f$ of the serving cell $c$, and $PL_{b,f,c}(q_d)$ represents the path loss information.

Based on the possible design, because the first network device directly indicates, to the first terminal device, the path loss information associated with the transmit power of the SRS transmission occasion $n$, the first network device may not need to indicate a power control adjustment state to the first terminal device, to reduce signaling overheads. In other words, the power control adjustment state associated with the SRS may not need to be considered when the transmit power of the SRS is determined.

According to a second aspect, an embodiment of this application provides a communication method. The method may include: A first network device generates first indication information, and sends the first indication information to a first terminal device, where the first indication information includes path loss information associated with a sounding reference signal SRS, and the path loss information is used by the first terminal device to determine transmit power of the SRS, or the first indication information includes transmit power of the SRS.

Based on the second aspect, the first network device sends the first indication information to the first terminal device, so that the first terminal device can determine the transmit power of the SRS based on the first indication information sent by the first network device, instead of based on a downlink reference signal sent by the first network device. This can reduce the transmit power of the SRS, thereby reducing impact of an interfering terminal device on an interfered terminal device, ensuring normal operation of the interfered terminal device, enabling CLI measurement between terminal devices, and improving system performance and efficiency.

In a possible design, the path loss information includes a path loss value; or the path loss information includes a path loss value range; or the path loss information includes an index of a path loss value; or the path loss information includes an index of a path loss value range.

Based on the possible design, a plurality of feasible solutions are provided for designing the path loss information.

In a possible design, the first network device receives second indication information from the first terminal device, where the second indication information includes a power headroom report of an SRS transmission occasion $m$, and $m$ is an integer.

In a possible design, the first network device receives third indication information from a second terminal device, where the third indication information includes a cross link interference CLI measurement result of the SRS.

In a possible design, the first network device determines, based on the power headroom report of the SRS transmission occasion $m$ and the CLI measurement result of the SRS, path loss information associated with transmit power of an SRS transmission occasion $n$; or the first network device determines transmit power of an SRS transmission occasion $n$ based on the power headroom report of the SRS transmission occasion $m$ and the CLI measurement result of the SRS, where $n$ is an integer, and $n$ is greater than $m$.

Based on the foregoing three possible designs, the first network device may determine the first indication information by comprehensively considering a power headroom report of the first terminal device and a degree of interference of the first terminal device to the second terminal device based on the power headroom report reported by the first terminal device and the CLI measurement result reported by the second terminal device, to provide a feasible solution for the first network device to determine the first indication information.

In a possible design, the first network device sends first maximum transmit power and/or second maximum transmit power to the first terminal device, where the first maximum transmit power and/or the second maximum transmit power are/is used to determine maximum output power of the first terminal device, and the first maximum transmit power and the second maximum transmit power are associated with a same carrier of a same cell.

In a possible design, the first network device sends the first maximum transmit power to the first terminal device, where the first maximum transmit power is used to determine the maximum output power; or the first network device sends the first maximum transmit power and the second maximum transmit power to the first terminal device, where the first maximum transmit power and the second maximum transmit power are used to determine the maximum output power; or the first network device sends the first maximum transmit power and the second maximum transmit power to the first terminal device, where the first maximum transmit power is used to determine the maximum output power.

In a possible design, the first maximum transmit power is less than the second maximum transmit power, and the second maximum transmit power is located in an uplink frequency information signaling unit.

Based on the foregoing three possible designs, the additional first maximum transmit power is introduced based on the second maximum transmit power, so that the second terminal device can be prevented from being blocked due to the SRS initially sent by the first terminal device.

In a possible design, the first indication information is located in one or more of the following signaling: system information block SIB signaling, radio resource control RRC signaling, medium access control control element MAC CE signaling, or downlink control information DCI signaling.

In a possible design, the transmit power of the SRS transmission occasion $n$ meets:

$$P_{SRS,b,f,c}\left(n,q_s,l\right)=min\left\{\begin{array}{c}P_{CMAX,f,c}\left(n\right)\\P_{O\_SRS,b,f,c}\left(q_s\right)+10\,log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)+h_{b,f,c}\left(n,l\right)\end{array}\right\},$$

where

$n$ is an integer, $P_{SRS,b,f,c}(n,q_s,l)$ represents the transmit power of the SRS transmission occasion $n$, $min$ represents a minimum value, $P_{CMAX,f,c}(n)$ represents the maximum output power, $P_{O\_SRS,b,f,c}(q_s)$ represents expected receive power on an active uplink bandwidth part $b$ of a carrier $f$ of a serving cell $c$, $q_s$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell $c$, $\alpha_{SRS,b,f,c}(q_s)$ represents a path loss compensation coefficient on the active uplink bandwidth part $b$ of the carrier $f$ of the serving cell c, $PL_{b,f,c}(q_d)$ represents the path loss information, and $h_{b,f,c}(n,l)$ represents a power control adjustment state associated with the SRS, where a value of the power control adjustment state is 0.

Based on the possible design, because the first network device may directly indicate, to the first terminal device, the transmit power of the SRS transmission occasion $n$ or the path loss information associated with the transmit power of the SRS transmission occasion $n$, the first network device may not need to indicate the power control adjustment state to the first terminal device, to reduce signaling overheads. In other words, the value of the power control adjustment state associated with the SRS may be 0.

In a possible design, the transmit power of the SRS transmission occasion $n$ meets:

$$P_{SRS,b,f,c}\left(n,q_s,l\right)=min\left\{\begin{array}{c}P_{CMAX,f,c}\left(n\right)\\P_{O\_SRS,b,f,c}\left(q_s\right)+10\,log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)\end{array}\right\},$$

where

$n$ is an integer, $P_{SRS,b,f,c}(n,q_s,l)$ represents the transmit power of the SRS transmission occasion $n$, $min$ represents a minimum value, $P_{CMAX,f,c}(n)$ represents the maximum output power, $P_{O\_SRS,b,f,c}(q_s)$ represents expected receive power on an active uplink bandwidth part $b$ of a carrier $f$ of a serving cell $c$, $q_s$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell c, $\alpha_{SRS,b,f,c}(q_s)$ represents a path loss compensation coefficient on the active uplink bandwidth part $b$ of the carrier $f$ of the serving cell c, and $PL_{b,f,c}(q_d)$ represents the path loss information.

Based on the possible design, because the first network device directly indicates, to the first terminal device, the path loss information associated with the transmit power of the SRS transmission occasion $n$, the first network device may not need to indicate a power control adjustment state to the first terminal device, to reduce signaling overheads. In other words, the power control adjustment state associated with the SRS may not need to be considered when the transmit power of the SRS is determined.

According to a third aspect, an embodiment of this application provides a communication method. The method may include: A first terminal device receives first maximum transmit power and/or second maximum transmit power from a first network device, and determines maximum output power of the first terminal device based on the first maximum transmit power and/or the second maximum transmit power, where the first maximum transmit power and the second maximum transmit power are associated with a same carrier of a same cell.

Based on the third aspect, the additional first maximum transmit power is introduced based on the second maximum transmit power, so that a second terminal device can be prevented from being blocked due to an SRS initially sent by the first terminal device.

In a possible design, the first terminal device receives the first maximum transmit power from the first network device, and the first terminal device determines the maximum output power based on the first maximum transmit power; or the first terminal device receives the first maximum transmit power and the second maximum transmit power from the first network device, and the first terminal device determines the maximum output power based on the first maximum transmit power and the second maximum transmit power; or the first terminal device receives the first maximum transmit power and the second maximum transmit power from the first network device, and the first terminal device determines the maximum output power based on the first maximum transmit power.

Based on the possible design, a plurality of feasible solutions are provided for the first terminal device to determine the maximum output power.

In a possible design, the first maximum transmit power is less than the second maximum transmit power, and the second maximum transmit power is located in an uplink frequency information signaling unit.

According to a fourth aspect, an embodiment of this application provides a communication method. The method may include: A first network device determines first maximum transmit power and/or second maximum transmit power, and sends the first maximum transmit power and/or the second maximum transmit power to a first terminal device, where the first maximum transmit power and/or the second maximum transmit power are/is used to determine maximum output power of the first terminal device, and the first maximum transmit power and the second maximum transmit power are associated with a same carrier of a same cell.

Based on the fourth aspect, the additional first maximum transmit power is introduced based on the second maximum transmit power, so that a second terminal device can be prevented from being blocked due to an SRS initially sent by the first terminal device.

In a possible design, the first network device sends the first maximum transmit power to the first terminal device, where the first maximum transmit power is used to determine the maximum output power; or the first network device sends the first maximum transmit power and the second maximum transmit power to the first terminal device, where the first maximum transmit power and the second maximum transmit power are used to determine the maximum output power; or the first network device sends the first maximum transmit power and the second maximum transmit power to the first terminal device, where the first maximum transmit power is used to determine the maximum output power.

Based on the possible design, a plurality of feasible solutions are provided for determining the maximum output power of the first terminal device.

In a possible design, the first maximum transmit power is less than the second maximum transmit power, and the second maximum transmit power is located in an uplink frequency information signaling unit.

According to a fifth aspect, an embodiment of this application provides a communication apparatus. The communication apparatus may be used in the first terminal device in the first aspect or the possible designs of the first aspect, to implement functions performed by the first terminal device. The communication apparatus may be the first terminal device, or may be a chip, a system on chip, or the like configured to implement the functions of the first terminal device. The communication apparatus may implement the functions performed by the first terminal device by executing corresponding software by hardware. The hardware or the software includes one or more modules corresponding to the foregoing functions, for example, a transceiver module and a processing module. The transceiver module is configured to receive first indication information from a first network device, and is further configured to send an SRS based on transmit power determined based on the first indication information, where the first indication information includes path loss information associated with the SRS, and the path loss information is used by the first terminal device to determine the transmit power of the SRS, or the first indication information includes the transmit power of the SRS.

In a possible design, the path loss information includes a path loss value; or the path loss information includes a path loss value range; or the path loss information includes an index of a path loss value; or the path loss information includes an index of a path loss value range.

In a possible design, the transceiver module is further configured to send second indication information to the first network device, where the second indication information includes a power headroom report of an SRS transmission occasion $m$, and $m$ is an integer.

In a possible design, the power headroom report of the SRS transmission occasion $m$ is used to determine path loss information associated with transmit power of an SRS transmission occasion $n$; or the power headroom report of the SRS transmission occasion $m$ is used to determine transmit power of an SRS transmission occasion $n$, where $n$ is an integer, and $n$ is greater than $m$.

In a possible design, the transceiver module is further configured to receive first maximum transmit power and/or second maximum transmit power from the first network device, where the first maximum transmit power and/or the second maximum transmit power are/is used to determine maximum output power of the first terminal device, and the first maximum transmit power and the second maximum transmit power are associated with a same carrier of a same cell.

In a possible design, the transceiver module is further configured to receive the first maximum transmit power from the first network device, and the processing module is further configured to determine the maximum output power based on the first maximum transmit power; or the transceiver module is further configured to receive the first maximum transmit power and the second maximum transmit power from the first network device, and the processing module is further configured to determine the maximum output power based on the first maximum transmit power and the second maximum transmit power; or the transceiver module is further configured to receive the first maximum transmit power and the second maximum transmit power from the first network device, and the processing module is further configured to determine the maximum output power based on the first maximum transmit power.

In a possible design, the first maximum transmit power is less than the second maximum transmit power, and the second maximum transmit power is located in an uplink frequency information signaling unit.

In a possible design, the first indication information is located in one or more of the following signaling: system information block SIB signaling, radio resource control RRC signaling, medium access control control element MAC CE signaling, or downlink control information DCI signaling.

In a possible design, the transmit power of the SRS transmission occasion $n$ meets:

$$P_{SRS,b,f,c}\left(n,q_s,l\right)=min\left\{\begin{array}{l}P_{CMAX,f,c}\left(n\right)\\P_{O\_SRS,b,f,c}\left(q_s\right)+10\,log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)+h_{b,f,c}\left(n,l\right)\end{array}\right\},$$

where

$n$ is an integer, $P_{SRS,b,f,c}(n,q_s,l)$ represents the transmit power of the SRS transmission occasion $n$, $min$ represents a minimum value, $P_{CMAX,f,c}(n)$ represents the maximum output power, $P_{O\_SRS,b,f,c}(q_s)$ represents expected receive power on an active uplink bandwidth part $b$ of a carrier $f$ of a serving cell $c$, $q_s$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell $c$, $\alpha_{SRS,b,f,c}(q_s)$ represents a path loss compensation coefficient on the active uplink bandwidth part $b$ of the carrier $f$ of the serving cell $c$, $PL_{b,f,c}(q_d)$ represents the path loss information, and $h_{b,f,c}(n,l)$ represents a power control adjustment state associated with the SRS, where a value of the power control adjustment state is 0.

In a possible design, the transmit power of the SRS transmission occasion $n$ meets:

$$P_{SRS,b,f,c}\left(n,q_s,l\right)=min\left\{\begin{array}{l}P_{CMAX,f,c}\left(n\right)\\P_{O\_SRS,b,f,c}\left(q_s\right)+10\,log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)\end{array}\right\},$$

where

$n$ is an integer, $P_{SRS,b,f,c}(n,q_s,l)$ represents the transmit power of the SRS transmission occasion $n$, $min$ represents a minimum value, $P_{CMAX,f,c}(n)$ represents the maximum output power, $P_{O\_SRS,b,f,c}(q_s)$ represents expected receive power on an active uplink bandwidth part $b$ of a carrier $f$ of a serving cell $c$, $q_s$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell $c$, $\alpha_{SRS,b,f,c}(q_s)$ represents a path loss compensation coefficient on the active uplink bandwidth part $b$ of the carrier $f$ of the serving cell $c$, and $PL_{b,f,c}(q_d)$ represents the path loss information.

According to a sixth aspect, an embodiment of this application provides a communication apparatus. The communication apparatus may be used in the first network device in the second aspect or the possible designs of the second aspect, to implement functions performed by the first network device. The communication apparatus may be the first network device, or may be a chip, a system on chip, or the like configured to implement the functions of the first network device. The communication apparatus may implement the functions performed by the first network device by executing corresponding software by hardware. The hardware or the software includes one or more modules corresponding to the foregoing functions, for example, a transceiver module and a processing module. The processing module is configured to generate first indication information, and the transceiver module is configured to send the first indication information to a first terminal device, where the first indication information includes path loss information associated with a sounding reference signal SRS, and the path loss information is used by the first terminal device to determine transmit power of the SRS, or the first indication information includes transmit power of the SRS.

In a possible design, the path loss information includes a path loss value; or the path loss information includes a path loss value range; or the path loss information includes an index of a path loss value; or the path loss information includes an index of a path loss value range.

In a possible design, the transceiver module is further configured to receive second indication information from the first terminal device, where the second indication information includes a power headroom report of an SRS transmission occasion $m$, and $m$ is an integer.

In a possible design, the transceiver module is further configured to receive third indication information from a second terminal device, where the third indication information includes a cross link interference CLI measurement result of the SRS.

In a possible design, the processing module is further configured to determine, based on the power headroom report of the SRS transmission occasion $m$ and the CLI measurement result of the SRS, path loss information associated with transmit power of an SRS transmission occasion $n$; or the processing module is further configured to determine transmit power of an SRS transmission occasion $n$ based on the power headroom report of the SRS transmission occasion $m$ and the CLI measurement result of the SRS, where $n$ is an integer, and $n$ is greater than $m$.

In a possible design, the transceiver module is further configured to send first maximum transmit power and/or second maximum transmit power to the first terminal device, where the first maximum transmit power and/or the second maximum transmit power are/is used to determine maximum output power of the first terminal device, and the first maximum transmit power and the second maximum transmit power are associated with a same carrier of a same cell.

In a possible design, the transceiver module is further configured to send the first maximum transmit power to the first terminal device, where the first maximum transmit power is used to determine the maximum output power; or the transceiver module is further configured to send the first maximum transmit power and the second maximum transmit power to the first terminal device, where the first maximum transmit power and the second maximum transmit power are used to determine the maximum output power; or the transceiver module is further configured to send the first maximum transmit power and the second maximum transmit power to the first terminal device, where the first maximum transmit power is used to determine the maximum output power.

In a possible design, the first maximum transmit power is less than the second maximum transmit power, and the second maximum transmit power is located in an uplink frequency information signaling unit.

In a possible design, the first indication information is located in one or more of the following signaling: system information block SIB signaling, radio resource control RRC signaling, medium access control control element MAC CE signaling, or downlink control information DCI signaling.

In a possible design, the transmit power of the SRS transmission occasion $n$ meets:

$$P_{SRS,b,f,c}\left(n,q_s,l\right)=min\left\{\begin{array}{c} P_{CMAX,f,c}\left(n\right) \\ P_{O\_SRS,b,f,c}\left(q_s\right)+10log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)+h_{b,f,c}\left(n,l\right) \end{array}\right\},$$

where

$n$ is an integer, $P_{SRS,b,f,c}(n,q_s,l)$ represents the transmit power of the SRS transmission occasion $n$, $min$ represents a minimum value, $P_{CMAX,f,c}(n)$ represents the maximum output power, $P_{O\_SRS,b,f,c}(q_s)$ represents expected receive power on an active uplink bandwidth part $b$ of a carrier $f$ of a serving cell $c$, $q_s$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell $c$, $\alpha_{SRS,b,f,c}(q_s)$ represents a path loss compensation coefficient on the active uplink bandwidth part $b$ of the carrier $f$ of the serving cell $c$, $PL_{b,f,c}(q_d)$ represents the path loss information, and $h_{b,f,c}(n,l)$ represents a power control adjustment state associated with the SRS, where a value of the power control adjustment state is 0.

In a possible design, the transmit power of the SRS transmission occasion $n$ meets:

$$P_{SRS,b,f,c}\left(n,q_s,l\right)=min\left\{\begin{array}{c} P_{CMAX,f,c}\left(n\right) \\ P_{O\_SRS,b,f,c}\left(q_s\right)+10log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right) \end{array}\right\},$$

where

$n$ is an integer, $P_{SRS,b,f,c}(n,q_s,l)$ represents the transmit power of the SRS transmission occasion $n$, $min$ represents a minimum value, $P_{CMAX,f,c}(n)$ represents the maximum output power, $P_{O\_SRS,b,f,c}(q_s)$ represents expected receive power on an active uplink bandwidth part $b$ of a carrier $f$ of a serving cell $c$, $q_s$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell $c$, $\alpha_{SRS,b,f,c}(q_s)$ represents a path loss compensation coefficient on the active uplink bandwidth part $b$ of the carrier $f$ of the serving cell c, and $PL_{b,f,c}(q_d)$ represents the path loss information.

According to a seventh aspect, an embodiment of this application provides a communication apparatus. The communication apparatus may be used in the first terminal device in the third aspect or the possible designs of the third aspect, to implement functions performed by the first terminal device. The communication apparatus may be the first terminal device, or may be a chip, a system on chip, or the like configured to implement the functions of the first terminal device. The communication apparatus may implement the functions performed by the first terminal device by executing corresponding software by hardware. The hardware or the software includes one or more modules corresponding to the foregoing functions, for example, a transceiver module and a processing module. The transceiver module is configured to receive first maximum transmit power and/or second maximum transmit power from a first network device, and the processing module is configured to determine maximum output power of the first terminal device based on the first maximum transmit power and/or the second maximum transmit power, where the first maximum transmit power and the second maximum transmit power are associated with a same carrier of a same cell.

In a possible design, the transceiver module is further configured to receive the first maximum transmit power from the first network device, and the processing module is configured to determine the maximum output power based on the first maximum transmit power; or the transceiver module is further configured to receive the first maximum transmit power and the second maximum transmit power from the first network device, and the processing module is configured to determine the maximum output power based on the first maximum transmit power and the second maximum transmit power; or the transceiver module is further configured to receive the first maximum transmit power and the second maximum transmit power from the first network device, and the processing module is further configured to determine the maximum output power based on the first maximum transmit power.

In a possible design, the first maximum transmit power is less than the second maximum transmit power, and the second maximum transmit power is located in an uplink frequency information signaling unit.

According to an eighth aspect, an embodiment of this application provides a communication apparatus. The communication apparatus may be used in the first network device in the fourth aspect or the possible designs of the fourth aspect, to implement functions performed by the first network device. The communication apparatus may be the first network device, or may be a chip, a system on chip, or the like configured to implement the functions of the first network device. The communication apparatus may implement the functions performed by the first network device by executing corresponding software by hardware. The hardware or the software includes one or more modules corresponding to the foregoing functions, for example, a transceiver module and a processing module. The processing module is configured to determine first maximum transmit power and/or second maximum transmit power, and the transceiver module is configured to send the first maximum transmit power and/or the second maximum transmit power to a first terminal device, where the first maximum transmit power and/or the second maximum transmit power are/is used to determine maximum output power of the first terminal device, and the first maximum transmit power and the second maximum transmit power are associated with a same carrier of a same cell.

In a possible design, the transceiver module is specifically configured to send the first maximum transmit power to the first terminal device, where the first maximum transmit power is used to determine the maximum output power; or the transceiver module is specifically configured to send the first maximum transmit power and the second maximum transmit power to the first terminal device, where the first maximum transmit power and the second maximum transmit power are used to determine the maximum output power; or the transceiver module is specifically configured to send the first maximum transmit power and the second maximum transmit power to the first terminal device, where the first maximum transmit power is used to determine the maximum output power.

In a possible design, the first maximum transmit power is less than the second maximum transmit power, and the second maximum transmit power is located in an uplink frequency information signaling unit.

According to a ninth aspect, an embodiment of this application provides a communication apparatus. The communication apparatus includes one or more processors. The one or more processors are configured to run a computer program or instructions. When the one or more processors execute computer instructions or the instructions, the communication apparatus is enabled to perform the communication method according to any one of the first aspect to the fourth aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one device. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a tenth aspect, an embodiment of this application provides a communication apparatus. The communication apparatus includes an input/output interface and a logic circuit. The input/output interface is configured to input and/or output information. The logic circuit is configured to perform the communication method according to any one of the first aspect to the fourth aspect, to perform processing based on information and/or generate information.

According to an eleventh aspect, an embodiment of this application provides a computer-readable storage medium. The computer-readable storage medium stores computer instructions or a program. When the computer instructions or the program is run on a computer, the communication method according to any one of the first aspect to the fourth aspect is enabled to be performed.

According to a twelfth aspect, an embodiment of this application provides a computer program product including computer instructions. When the computer program product is run on a computer, the communication method according to any one of the first aspect to the fourth aspect is enabled to be performed.

According to a thirteenth aspect, an embodiment of this application provides a computer program. When the computer program is run on a computer, the communication method according to any one of the first aspect to the fourth aspect is enabled to be performed.

For technical effects brought by any design manner of the ninth aspect to the thirteenth aspect, refer to the technical effects brought by any one of the first aspect to the fourth aspect.

According to a fourteenth aspect, an embodiment of this application provides a communication system. The communication system may include the communication apparatus according to any one of the fifth aspect or the possible designs of the fifth aspect and the communication apparatus according to any one of the sixth aspect or the possible designs of the sixth aspect; or include the communication apparatus according to any one of the seventh aspect or the possible designs of the seventh aspect and the communication apparatus according to any one of the eighth aspect or the possible designs of the eighth aspect.

**BRIEF DESCRIPTION OF DRAWINGS**

FIG. 1 is a diagram of a TDD system according to an embodiment of this application;
FIG. 2 is a diagram of an SBFD system according to an embodiment of this application;
FIG. 3 is a diagram of an SFFD system according to an embodiment of this application;
FIG. 4 is a diagram of cross link interference according to an embodiment of this application;
FIG. 5 is a diagram of a communication system according to an embodiment of this application;
FIG. 6 is a diagram of a communication system according to an embodiment of this application;
FIG. 7 is a diagram of a communication system according to an embodiment of this application;
FIG. 8 is a diagram of a communication apparatus according to an embodiment of this application;
FIG. 9 is a flowchart of a communication method according to an embodiment of this application;
FIG. 10 is a flowchart of a communication method according to an embodiment of this application;
FIG. 11 is a diagram of composition of a communication apparatus according to an embodiment of this application; and
FIG. 12 is a diagram of composition of a communication apparatus according to an embodiment of this application.

**DESCRIPTION OF EMBODIMENTS**

Before embodiments of this application are described, technical terms used in embodiments of this application are described.

5th-generation (5th-generation, 5G) mobile communication new radio (new radio, NR) wireless communication system: is deployed in a mid-high frequency band, and implements a high data rate and a low delay by using a large bandwidth.

Time division duplexing (time division duplexing, TDD) system: Different slots of a same frequency domain resource may be used for uplink and downlink communication between a terminal device and a network device, and a receiving channel and a transmission channel are separated by using time. That is, a transmission direction of a symbol may be configured as uplink, downlink, or flexible, and a transmission direction of a symbol is configured for an entire component carrier (component carrier, CC).

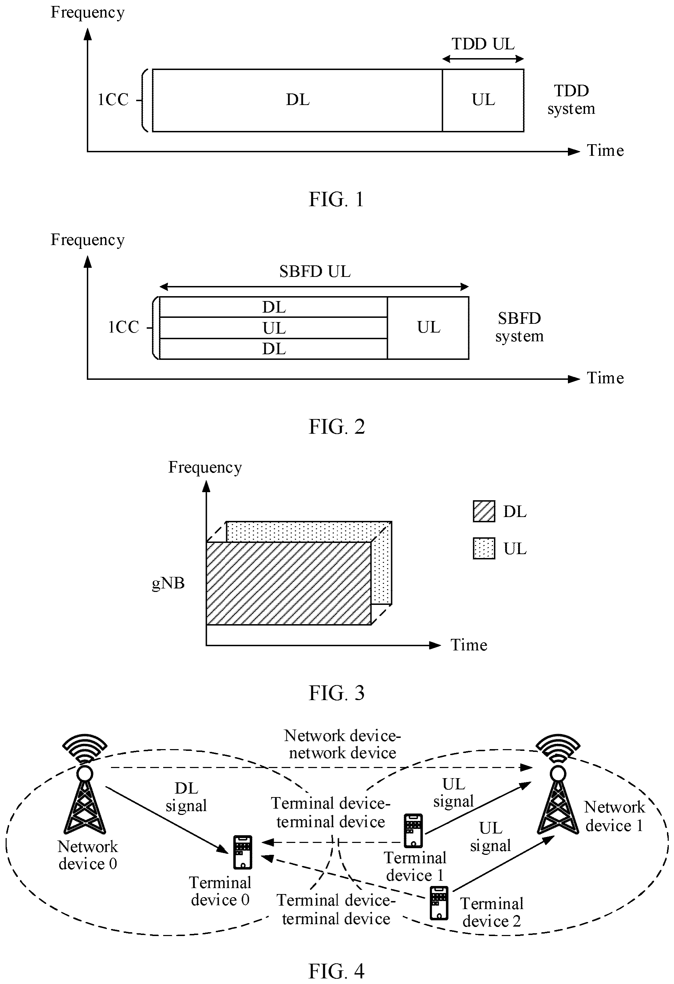

In the TDD system, a downlink (downlink, DL) usually occupies main time resources, resulting in a coverage imbalance between the DL and an uplink (uplink, UL), for example, as shown in FIG. 1. Compared with a frequency division duplexing (frequency division duplexing, FDD) system, the TDD system has poorer uplink coverage and a higher uplink delay.

Subband full duplex (subband full duplex, SBFD) system: For the problems of the uplink coverage and the delay in the TDD system, an SBFD solution is proposed. In the SBFD solution, one CC may be divided into a plurality of subbands, and transmission directions of different subbands on one symbol may be different, that is, different frequency domain resources (subbands) may be used for an uplink and a downlink. A typical SBFD solution is shown in FIG. 2. A middle subband is an uplink subband, and an upper subband and a lower subband are downlink subbands. In the SBFD solution, transmission directions of different subbands on one symbol on one CC are different, that is, sending and receiving may be simultaneously implemented on one symbol.

Single frequency full duplex (single frequency full duplex, SFFD) system: For the problems of the uplink coverage and the delay in the TDD system, an SFFD solution is further proposed. In the SFFD solution, a same frequency domain resource may be used for an uplink and a downlink. A typical SFFD solution is shown in FIG. 3. Receiving and sending on one symbol may be simultaneously implemented on an entire CC.

Based on the foregoing description, a communication mechanism of "subband full duplex on a network device side and half duplex on a terminal device side" may be used. The half duplex on the terminal device means that in the TDD system, the terminal device can perform only receiving or sending but cannot simultaneously perform receiving and sending on one symbol. In this communication mechanism, uplink transmission resources available to the terminal device increase, so that UL coverage can be effectively improved, and a UL delay can be reduced.

Cross link interference (cross link interference, CLI): In a communication system, when a network device communicates with a terminal device, cross link interference may exist between an uplink and a downlink due to signal power leakage (a signal power in a subband is leaked to an adjacent subband). According to a source of an interference source, cross link interference mainly includes two types. A first type is cross link interference between terminal devices, and mainly means that an uplink signal sent by a terminal device (that is, an interfering terminal device) causes interference to a downlink signal received by another terminal device (that is, an interfered terminal device). A second type is cross link interference between network devices, and mainly means that a downlink signal sent by a network device (that is, an interfering network device) causes interference to an uplink signal received by another network device (that is, an interfered network device).

The interfering terminal device and the interfered terminal device may be located in coverage areas of different network devices, or may be located in coverage areas of a same network device, or may even be located in one cell of a same network device. This is not limited.

For example, as shown in FIG. 4, when a terminal device 1 or a terminal device 2 (that is, an interfering terminal device) sends an uplink signal (UL signal) to a network device 1, cross link interference may be caused to a downlink signal (DL signal) received by a terminal device 0 (that is, an interfered terminal device). When a network device 0 (that is, an interfering network device) sends a downlink signal to the terminal device 0, cross link interference may be caused to an uplink signal received by the network device 1 (that is, an interfered network device).

In an example in which when the terminal device 1 or the terminal device 2 sends the uplink signal (for example, a sounding reference signal (sounding reference signal, SRS)) to the network device 1, cross link interference may be caused to the downlink signal received by the terminal device 0, the network device 1 may configure one or more SRS resources for each terminal device (for example, the terminal device 1 or the terminal device 2), and the terminal device sends an SRS on the SRS resource. The SRS may be used by a terminal device (for example, the terminal device 0) of the network device 0 to measure reference signal received power (reference signal received power, RSRP) of terminal device-terminal device CLI. The network device 0 may configure a time-frequency resource for each terminal device (for example, the terminal device 0), to receive an SRS sent by a terminal device (for example, the terminal device 1 or the terminal device 2) of the network device 1, and measure RSRP of terminal device-terminal device CLI (that is, the terminal device 0 does not receive the downlink signal of the network device 0 on the time-frequency resource, but receives the SRS of the terminal device 1 or the terminal device 2). When the network device 1 configures a different SRS resource for each terminal device, for example, the terminal device 1 sends an SRS on an SRS resource 1, and the terminal device 2 sends an SRS on an SRS resource 2, the terminal device 0 of the network device 0 may separately perform measurement on time-frequency resources corresponding to the SRS resource 1 and the SRS resource 2, to obtain RSRP of terminal device 1-terminal device 0 CLI and RSRP of terminal device 2-terminal device 0 CLI. The foregoing manner may be referred to as SRS-RSRP measurement.

Alternatively, the network device 0 may configure a time-frequency resource for the terminal device 0, to measure a received signal strength indicator (received signal strength indicator, RSSI) of CLI caused by a terminal device of the network device 1. The terminal device 0 may measure an RSSI of CLI on a time-frequency resource n. Therefore, the terminal device 0 may obtain RSSIs of terminal device-terminal device CLI caused by different terminal devices in the network device 1, that is, separately obtain an RSSI of terminal device 1-terminal device 0 CLI and an RSSI of terminal device 2-terminal device 0 CLI. The foregoing manner may be referred to as CLI-RSSI measurement.

Both the foregoing two measurement manners may be used for terminal device-terminal device CLI measurement, and different resources for CLI measurement involved in the foregoing two measurement manners may be collectively referred to as CLI measurement resources. The network device 0 may indicate the configured time-frequency resource to the terminal device 0 by using higher layer signaling or downlink control information (downlink control information, DCI), for SRS-RSRP measurement and/or CLI-RSSI measurement. The terminal device 0 may report a corresponding measurement result to the network device 0 by using radio resource control (radio resource control, RRC) signaling.

When being to send an SRS, the terminal device may determine transmit power of the SRS based on a downlink reference signal sent by the network device, and send the SRS based on the determined transmit power of the SRS.

For example, the downlink reference signal may be a channel state information reference signal (channel state information-reference signal, CSI-RS) or a synchronization signal and physical broadcast channel block (synchronization signal and PBCH block, SSB) signal. This is not limited.

Based on the foregoing description of the cross link interference, when the interfering terminal device is located at a cell edge, a path loss between the interfering terminal device and the network device is large. Consequently, transmit power of the SRS determined by the interfering terminal device may be large, or even reach maximum transmit power of the terminal device. If the interfered terminal device is close to the interfering terminal device, the interfered terminal device may be directly blocked due to large receive power of the SRS, and cannot operate normally. Therefore, how to reduce impact of the interfering terminal device on the interfered terminal device and ensure normal operation of the interfered terminal device becomes a technical problem to be urgently resolved.

To resolve the foregoing technical problem, embodiments of this application provide a communication method. The method may include: A first terminal device receives first indication information from a first network device, and sends an SRS based on transmit power determined based on the first indication information, where the first indication information includes path loss information associated with the sounding reference signal SRS, and the path loss information is used by the first terminal device to determine the transmit power of the SRS, or the first indication information includes the transmit power of the SRS.

In embodiments of this application, compared with a manner in which the first terminal device determines transmit power of the SRS based on a downlink reference signal sent by the first network device, a manner of determining the transmit power of the SRS based on the first indication information sent by the first network device can reduce the transmit power of the SRS, thereby reducing impact of an interfering terminal device on an interfered terminal device, ensuring normal operation of the interfered terminal device, enabling CLI measurement between terminal devices, and improving system performance and efficiency.

The following describes implementations of embodiments of this application in detail with reference to accompanying drawings in this specification.

The communication method provided in embodiments of this application may be applied to any communication system. The communication system may be a third generation partnership project (third generation partnership project, 3GPP) communication system, for example, a long term evolution (long term evolution, LTE) system, or may be a 5G mobile communication system, an NR communication system, or a new radio vehicle-to-everything (vehicle-to-everything, NR V2X) system. The communication method may be further applied to an LTE and 5G hybrid networking system, or may be applied to a non-terrestrial network (non-terrestrial network, NTN) system, a device-to-device (device-to-device, D2D) communication system, a machine-to-machine (machine-to-machine, M2M) communication system, the internet of things (internet of things, IoT), and another next generation communication system, for example, a future communication system like 6G. Alternatively, the communication system may be a non-3GPP communication system. This is not limited.

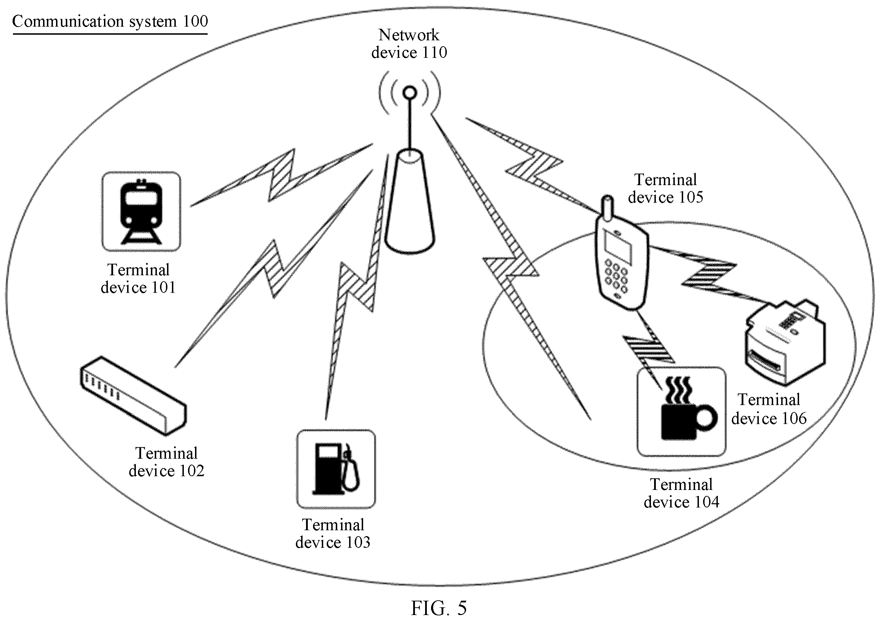

The following uses FIG. 5 as an example to describe the communication system provided in embodiments of this application.

FIG. 5 is a diagram of a communication system according to an embodiment of this application. As shown in FIG. 5, the communication system may include one or more terminal devices (for example, a terminal device 101 to a terminal device 106) and one or more network devices (for example, a network device 110).

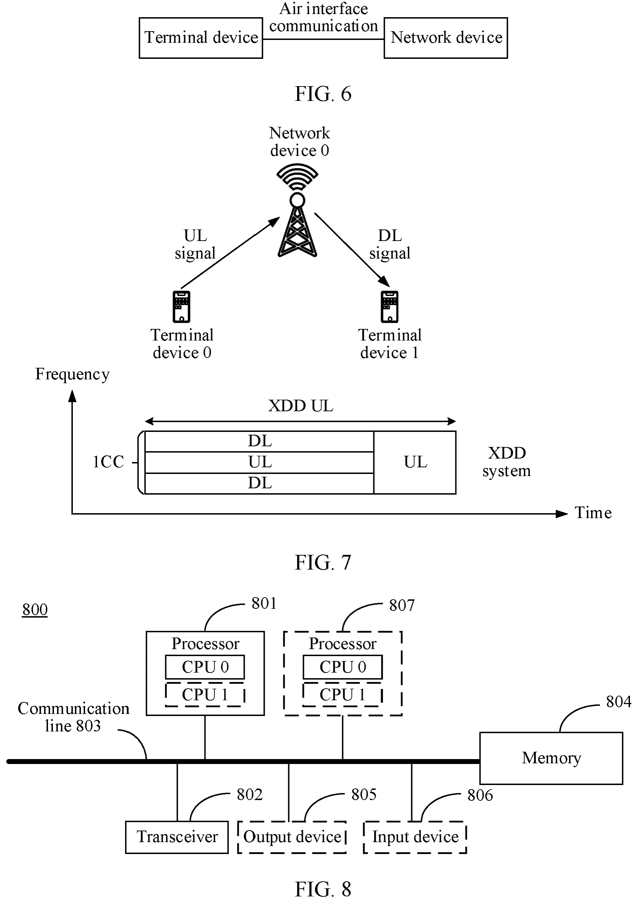

The terminal device in FIG. 5 may be located in a cell coverage area of the network device, and the terminal device may be connected to an air interface of the network device in a manner shown in FIG. 6. For example, the terminal device may perform air interface communication with the network device over an uplink or a downlink. For example, the terminal device may send uplink data to the network device in an uplink direction through a physical uplink shared channel (physical uplink shared channel, PUSCH), and the network device may send downlink data to the terminal device in a downlink direction through a physical downlink shared channel (physical downlink shared channel, PDSCH).

The terminal device in FIG. 5 may be a device having a wireless transceiver function or a chip or a chip system that can be disposed in the device, may allow a user to access a network, and is a device configured to provide voice and/or data connectivity for the user. The terminal device may further collect data, receive control information and downlink data of the network device, send an electromagnetic wave, and transmit uplink data to the network device. The terminal device may also be referred to as user equipment (user equipment, UE), a subscriber unit (subscriber unit), a terminal (terminal), a mobile station (mobile station, MS), a mobile terminal (mobile terminal, MT), or the like. Specifically, the terminal device in FIG. 5 may be a cellular phone (cellular phone), a smartphone (smartphone), a wireless data card, a mobile phone (mobile phone), a personal digital assistant (personal digital assistant, PDA) computer, a tablet computer or a computer with a wireless transceiver function, a wireless modem (modem), a handheld device (handset), a laptop computer (laptop computer), a smart sound box, a train detector, a gas station sensor, or the like. Alternatively, the terminal device may be a VR terminal, an AR terminal, a wireless terminal in industrial control, a wireless terminal in self-driving, a wireless terminal in telemedicine, a wireless terminal in smart grid, a wireless terminal in transportation safety, a wireless terminal in smart city (smart city), a wireless terminal in smart home (smart home), a machine type communication (machine type communication, MTC) terminal, a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

The network device in FIG. 5 may be any device that is deployed in an access network and that can perform wireless communication with the terminal device, may be described as an access device that is used by the terminal device to access the communication system in a wireless manner, or may be a chip or a chip system that can be disposed in the device, and is mainly configured to implement functions such as a wireless physical control function, resource scheduling and radio resource management, radio access control, and mobility management. Specifically, the network device may be a device supporting wired access, or may be a device supporting wireless access. For example, the network device may be an access network (access network, AN) device/a radio access network (radio access network, RAN) device, and includes a plurality of AN/RAN nodes. The AN/RAN node may be an access point (access point, AP), a NodeB (NodeB, NB), a macro base station, a micro base station (or described as a small cell), a pico base station, a balloon station, a relay station, an enhanced NodeB (enhanced NodeB, eNB), a next generation eNB (next generation eNB, ng-eNB), a next generation NodeB (next generation NodeB, gNB), a base station in a 5G communication system, a base station in a future mobile communication system or an access node in a wireless fidelity (wireless fidelity, Wi-Fi) system, a transmission reception point (transmission reception point, TRP), a transmission point (transmission point, TP), a transmission measurement function (transmission measurement function, TMF), a wearable device, a vehicle-mounted device, another access node, or the like. A specific technology and a specific device form that are used by the network device are not limited in embodiments of this application.

Alternatively, the network device may be of a central unit (central unit, CU)/distributed unit (distributed unit, DU) architecture. In this case, the network device may include two network elements: a CU and a DU. Alternatively, the network device may be of a control plane-user plane (control plane-user plane, CP-UP) architecture. In this case, the network device may include three network elements: a control plane of a CU (CU-CP), a user plane of a CU (CU-UP), and a DU. This is not limited.

Optionally, the network device and the terminal device may be deployed on land, including an indoor or outdoor device, a handheld device, or a vehicle-mounted device; may be deployed on the water; or may be deployed on an aircraft, a balloon, or a satellite in the air. Application scenarios of the network device and the terminal device are not limited in embodiments of this application.

For example, the communication system shown in FIG. 5 may be any communication system in which cross link interference exists.

For example, as shown in FIG. 7, the communication system may be a communication system that uses a communication mechanism of "subband full duplex on a network device side and half duplex on a terminal device side". For example, there are two terminal devices in a coverage area of a network device 0 (a quantity of terminal devices in the figure is an example, and a quantity of terminal devices may be different in an actual scenario). When a terminal device 0 sends an uplink signal to the network device 0, cross link interference may be caused to a downlink signal received by a terminal device 1 due to signal power leakage.

It should be noted that the terminal device and the network device in embodiments of this application each may be one or more chips, or may be a system-on-chip (system-on-chip, SoC), or the like. FIG. 5 is merely an example diagram, and a quantity of devices included in FIG. 5 is not limited. In addition, in addition to the devices shown in FIG. 5, the communication system may further include another device, for example, may further include a wireless relay device and a wireless backhaul device. Names of the devices and the links in FIG. 5 are not limited. In addition to the names shown in FIG. 5, the devices and the links may alternatively have other names. This is not limited.

During specific implementation, as shown in FIG. 5, for example, each terminal device or each network device may use a composition structure shown in FIG. 8, or include components shown in FIG. 8. FIG. 8 is a diagram of composition of a communication apparatus 800 according to an embodiment of this application. The communication apparatus 800 may be a terminal device, or a chip or a system on chip in the terminal device; or may be a network device, or a chip or a system on chip in the network device. As shown in FIG. 8, the communication apparatus 800 includes a processor 801, a transceiver 802, and a communication line 803.

Further, the communication apparatus 800 may further include a memory 804. The processor 801, the memory 804, and the transceiver 802 may be connected through the communication line 803.

The processor 801 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 801 may alternatively be another apparatus having a processing function, for example, a circuit, a component, or a software module. This is not limited.

The transceiver 802 is configured to communicate with another device or another communication network. The another communication network may be the Ethernet, a radio access network (radio access network, RAN), a wireless local area network (wireless local area network, WLAN), or the like. The transceiver 802 may be a module, a circuit, a transceiver, or any apparatus that can implement communication.

The communication line 803 is configured to transfer information between the components included in the communication apparatus 800.

The memory 804 is configured to store instructions. The instructions may be computer programs.

The memory 804 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or the like. This is not limited.

It should be noted that the memory 804 may exist independently of the processor 801, or may be integrated with the processor 801. The memory 804 may be configured to store instructions, program code, some data, or the like. The memory 804 may be located inside the communication apparatus 800, or may be located outside the communication apparatus 800. This is not limited. The processor 801 is configured to execute the instructions stored in the memory 804, to implement a communication method provided in the following embodiments of this application.

In an example, the processor 801 may include one or more CPUs, for example, a CPU 0 and a CPU 1 in FIG. 8.

In an optional implementation, the communication apparatus 800 includes a plurality of processors. For example, the communication apparatus 800 may further include a processor 807 in addition to the processor 801 in FIG. 8.

In an optional implementation, the communication apparatus 800 further includes an output device 805 and an input device 806. For example, the input device 806 is a device like a keyboard, a mouse, a microphone, or a joystick, and the output device 805 is a device like a display or a speaker (speaker).

It should be noted that the communication apparatus 800 may be a desktop computer, a portable computer, a network server, a mobile phone, a tablet computer, a wireless terminal, an embedded device, a chip system, or a device having a structure similar to that in FIG. 8. In addition, the composition structure shown in FIG. 8 does not constitute a limitation on the communication apparatus. In addition to the components shown in FIG. 8, the communication apparatus may include more or fewer components than those shown in the figure, a combination of some components, or splits from some components, or a different component layout.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

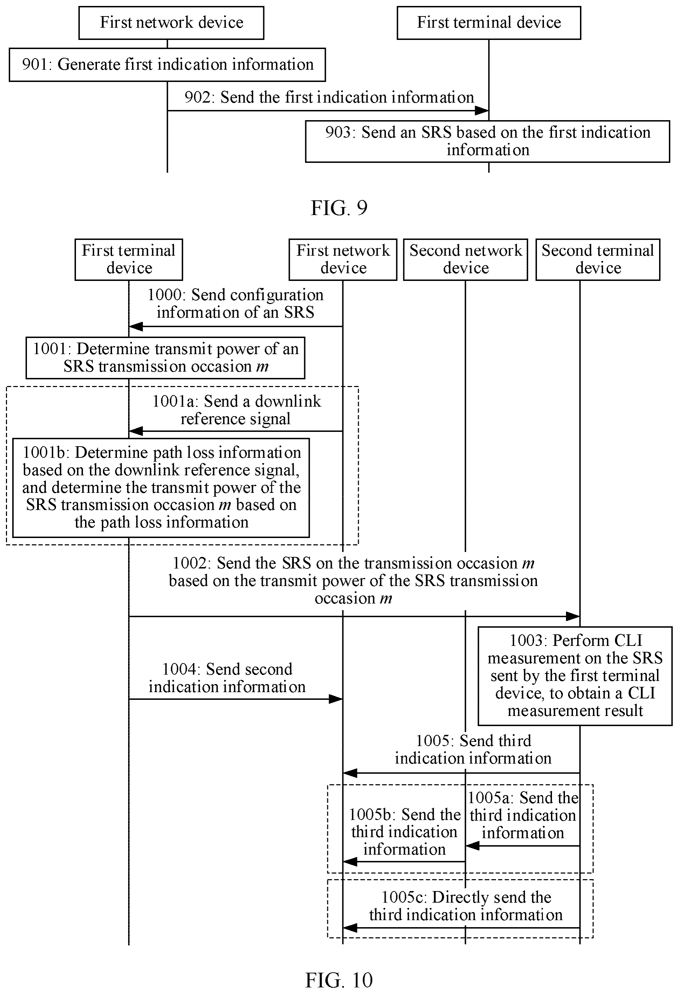

With reference to the communication system shown in FIG. 5, communication method provided in an embodiment of this application is described by referring to FIG. 9. A first terminal device may be any terminal device in the communication system shown in FIG. 5, and a first network device may be a serving network device of the first terminal device, or the first terminal device is described as belonging to the first network device. The terminal device and the network device described in the following embodiments may have the components shown in FIG. 8. Processing performed by a single execution body (the terminal device or the network device) shown in embodiments of this application may alternatively be performed by a plurality of execution bodies. These execution bodies may be logically and/or physically separated. This is not limited.

FIG. 9 is a flowchart of a communication method according to an embodiment of this application. As shown in FIG. 9, the method may include the following steps.

Step 901: A first network device generates first indication information.

The first indication information may include path loss information associated with an SRS, and the path loss information may be used by a first terminal device to determine transmit power of the SRS, or the first indication information may include transmit power of the SRS.

For example, the first network device may determine, based on a power headroom report of an SRS transmission occasion $m$ and a CLI measurement result of the SRS (for example, SRS-RSRP), path loss information associated with transmit power of an SRS transmission occasion $n$. Alternatively, the first network device may determine transmit power of an SRS transmission occasion $n$ based on a power headroom report of an SRS transmission occasion $m$ and a CLI measurement result of the SRS (for example, SRS-RSRP).

Herein, $m$ and $n$ are integers, and $n$ is greater than $m$.

Optionally, the first network device may obtain the power headroom report of the SRS transmission occasion $m$ and the CLI measurement result of the SRS with reference to the following method shown in FIG. 10. The method may include the following step.

Step 1001: The first terminal device determines transmit power of the SRS transmission occasion $m$.

Before the first terminal device determines the transmit power of the SRS transmission occasion $m$, as shown in step 1000 in FIG. 10, the first network device may send configuration information of the SRS to the first terminal device. The configuration information may include information related to the SRS, such as a time-frequency resource occupied by the SRS, a sequence, and power control.

In a possible design, the first terminal device may determine the transmit power of the SRS transmission occasion $m$ based on a partial path loss compensation mechanism and a downlink reference signal sent by the first network device.

As shown in step 1001a and step 1001b in FIG. 10, the first network device may send the downlink reference signal to the first terminal device, and the first terminal device may determine, based on the downlink reference signal, path loss information associated with the transmit power of the SRS transmission occasion $m$, and determine the transmit power of the SRS transmission occasion $m$ based on the path loss information.

The downlink reference signal may be a CSI-RS signal, an SSB signal, or the like. This is not limited.

For example, in an example in which the terminal device sends the SRS on an active uplink bandwidth part (bandwidth part, BWP) $b$ of a carrier $f$ of a serving cell $c$ by using an SRS power control adjustment state $l$, the terminal device may determine the transmit power of the SRS transmission occasion $m$ according to the following formula:

$$P_{SRS,b,f,c}\left(m,q_s,l\right)=min\left\{\begin{array}{l}P_{CMAX,f,c}\left(m\right)\\P_{O\_SRS,b,f,c}\left(q_s\right)+10log_{10}\left(2^{\mu}\cdot M_{SRS,b,f,c}\left(m\right)\right)+\alpha_{SRS,b,f,c}\left(q_s\right)\cdot PL_{b,f,c}\left(q_d\right)+h_{b,f,c}\left(m,l\right)\end{array}\right\},$$

where

$P_{SRS,b,f,c}(m,q_s,l)$ represents the transmit power of the SRS transmission occasion $m$, $min$ represents a minimum value, $P_{CMAX,f,c}(m)$ represents the maximum output power of the first terminal device, $P_{O\_SRS,b,f,c}(q_s)$ represents expected receive power that is configured by the first network device and that is on the active uplink bandwidth part $b$ of the carrier $f$ of the serving cell $c$, $q_s$ represents an index of an SRS resource set to which the SRS belongs (which indicates that $P_{O\_SRS,b,f,c}$ is configured for each SRS resource set), $M_{SRS,b,f,c}(m)$ represents an SRS transmission bandwidth (expressed in a quantity of resource blocks (resource block, RB)) that is configured by the first network device and that is on the SRS transmission occasion $m$ on the active uplink bandwidth part $b$ of the carrier $f$ of the serving cell $c$, $\alpha_{SRS,b,f,c}(q_s)$ represents a path loss compensation coefficient that is configured by the first network device and that is on the active uplink bandwidth part $b$ of the carrier $f$ of the serving cell $c$, $q_s$ represents an index of an SRS resource set to which the SRS belongs (which indicates that $\alpha_{SRS,b,f,c}$ is configured for each SRS resource set), $PL_{b,f,c}(q_d)$ represents a downlink path loss estimate calculated by the first terminal device based on a downlink reference signal whose index is $q_d$ (that is, path loss information calculated by the first terminal device based on the downlink reference signal), and $h_{b,f,c}(m,l)$ represents a power control adjustment state that is configured by the first network device and that is associated with the SRS.

Optionally, for the maximum output power $P_{CMAX,f,c}$ of the first terminal device, if the first network device configures maximum output power for the first terminal device, the maximum output power may be the maximum output power configured by the first network device; or if the first network device does not configure maximum output power for the first terminal device, the maximum output power may be maximum output power defined by a capability of the first terminal device.

When the first network device configures the maximum output power for the first terminal device, the first network device may send first maximum transmit power and/or second maximum transmit power to the first terminal device, and determine the maximum output power of the first terminal device based on the first maximum transmit power and/or the second maximum transmit power.

Optionally, the first maximum transmit power and the second maximum transmit power may be associated with a same carrier of a same cell.

In a first example, the first network device sends the second maximum transmit power to the first terminal device, and determines the maximum output power based on the second maximum transmit power.

When the first network device configures the second maximum transmit power but does not configure the first maximum transmit power for the first terminal device, the first network device or the first terminal device may determine the second maximum transmit power as the maximum output power of the first terminal device.

In a second example, the first network device sends the first maximum transmit power to the first terminal device, and determines the maximum output power based on the first maximum transmit power.

When the first network device configures the first maximum transmit power but does not configure the second maximum transmit power for the first terminal device, the maximum output power $P_{CMAX,f,c}$ of the first terminal device meets the following formulas:

$$P_{CMAX,L,f,c}\leq P_{CMAX,f,c}\leq P_{CMAX,H,f,c}\;;$$

$$P_{CMAX,L,f,c}=min\left\{\begin{array}{l}P_{EMAX,c\_add}-\Delta T_{C,c}\\\left(P_{PowerClass}-\Delta P_{PowerClass}\right)-max\left(max\left(MPR_c+\Delta MPR_c,A\text{-}MPR_c\right)+\Delta T_{IB,c}+\Delta T_{C,c}+\Delta T_{RxSRS},P\text{-}MPR_c\right)\end{array}\right\};$$

and

$$P_{CMAX,H,f,c}=min\left\{\begin{array}{l}P_{EMAX,c\_add}\\P_{PowerClass}-\Delta P_{PowerClass}\end{array}\right\},$$

where

$P_{CMAX,L,f,c}$ represents a minimum value of the maximum output power, $P_{CMAX,H,f,c}$ represents a maximum value of the maximum output power, $min$ represents a minimum value, $max$ represents a maximum value, $P_{EMAX,c\_add}$ represents the first maximum transmit power, $P_{PowerClass}$ represents maximum transmit power corresponding to a power level supported by the first terminal device, $\Delta P_{PowerClass}$ represents a delta of $P_{PowerClass}$, $\Delta MPR_c$ represents a delta of $MPR_c$, and $\Delta T_{C,c}$,

$A\text{-}MPR_c$ , $\Delta T_{IB,c}$ , $\Delta T_{RxSRS}$ , and $P\text{-}MPR_c$ are preset values.

In a third example, the first network device sends the first maximum transmit power and the second maximum transmit power to the first terminal device, and determines the maximum output power based on the first maximum transmit power and the second maximum transmit power.

When the first network device configures both the first maximum transmit power and the second maximum transmit power for the first terminal device, the maximum output power $P_{CMAX,f,c}$ of the first terminal device meets the following formulas:

$$P_{CMAX,L,f,c} \leq P_{CMAX,f,c} \leq P_{CMAX,H,f,c} ;$$

$$P_{CMAX,L,f,c}=min\left\{ \begin{array}{l} min\left\{ P_{EMAX,c}, P_{EMAX,c\_add} \right\} - \Delta T_{C,c} \\ \left( P_{PowerClass} - \Delta P_{PowerClass} \right) - max\left( max\left( MPR_c + \Delta MPR_c, A\text{-}MPR_c \right) + \Delta T_{IB,c} + \Delta T_{C,c} + \Delta T_{RxSRS}, P\text{-}MPR_c \right) \end{array} \right\};$$

and

$$P_{CMAX,H,f,c}=min\left\{ \begin{array}{l} min\left\{ P_{EMAX,c}, P_{EMAX,c\_add} \right\} \\ P_{PowerClass} - \Delta P_{PowerClass} \end{array} \right\},$$

where

$P_{EMAX,c}$ represents the second maximum transmit power.

Optionally, in the third example, a value relationship between the first maximum transmit power and the second maximum transmit power may not be limited.

In a fourth example, the first network device sends the first maximum transmit power and the second maximum transmit power to the first terminal device, and determines the maximum output power based on the first maximum transmit power.

When the first network device configures both the first maximum transmit power and the second maximum transmit power for the first terminal device, if the first maximum transmit power is less than the second maximum transmit power, the maximum output power $P_{CMAX,f,c}$ of the first terminal device meets the following formulas:

$$P_{CMAX,L,f,c} \leq P_{CMAX,f,c} \leq P_{CMAX,H,f,c} ;$$

$$P_{CMAX,L,f,c}=min\left\{ \begin{array}{l} P_{EMAX,c\_add} - \Delta T_{C,c} \\ \left( P_{PowerClass} - \Delta P_{PowerClass} \right) - max\left( max\left( MPR_c + \Delta MPR_c, A\text{-}MPR_c \right) + \Delta T_{IB,c} + \Delta T_{C,c} + \Delta T_{RxSRS}, P\text{-}MPR_c \right) \end{array} \right\};$$

and

$$P_{CMAX,H,f,c}=min\left\{ \begin{array}{l} P_{EMAX,c\_add} \\ P_{PowerClass} - \Delta P_{PowerClass} \end{array} \right\}.$$

Based on the foregoing descriptions of the first maximum transmit power and the second maximum transmit power, optionally, the second maximum transmit power may be located in an uplink frequency information signaling unit. For example, the second maximum transmit power is a p-Max field in a signaling unit FrequencyInfoUL or FrequencyInfoUL-SIB in the conventional technology. The first maximum transmit power is newly introduced p-Max that is different from existing p-Max in the conventional technology. Preferably, the first maximum transmit power may be used only for an SRS. Extendedly, the first maximum transmit power may be further used for an uplink signal or channel other than the SRS.

Optionally, the first maximum transmit power may be located in one or more of the following signaling: RRC signaling, system information block 1 (system information block 1, SIB1) signaling, or the like. This is not limited.

Optionally, the first maximum transmit power may be less than the second maximum transmit power.

Optionally, the first maximum transmit power may take effect when the first terminal device determines transmit power of an initial SRS, or may always take effect in a subsequent SRS transmission process. That the first maximum transmit power takes effect when the first terminal device determines the transmit power of the initial SRS may be considered as that the first maximum transmit power takes effect in a phase in which the first terminal device initially sends the SRS, for example, the first time the SRS is sent, or the first several times the SRS is sent, or an initial period of time, where the time may be configured by the network device or predefined, for example, 5 ms or 10 ms, or a time before the first indication information is received.

In a possible implementation, a value range of the first maximum transmit power is (-30, X) dBm, where X is an integer, and X is less than or equal to 33. For example, a value of X is 0, -5, or -15. The value of X is related to blocking power of the terminal device and a coupling loss between terminal devices. If the blocking power of the terminal device is -56 dBm, and the coupling loss between terminal devices is not greater than 40 dB, the first maximum transmit power is not greater than -16 dBm, that is, the value of X is -16 dBm.

Based on the foregoing description of the maximum output power, the additional first maximum transmit power is introduced based on the second maximum transmit power, so that a second terminal device can be prevented from being blocked due to the SRS initially sent by the first terminal device.

Step 1002: The first terminal device sends the SRS on the transmission occasion $m$ based on the transmit power of the SRS transmission occasion $m$.

Step 1003: The second terminal device performs CLI measurement on the SRS sent by the first terminal device, to obtain a CLI measurement result.

The second terminal device may be any terminal device that can perform CLI measurement on the SRS sent by the first terminal device, that is, the first terminal device may be referred to as an interfering terminal device, and the second terminal device may also be referred to as an interfered terminal device.

Optionally, the first terminal device and the second terminal device may belong to different network devices, or may belong to a same network device, or may even belong to a same cell of a same network device. This is not limited.

Step 1004: The first terminal device sends second indication information to the first network device, and correspondingly, the first network device receives the second indication information from the first terminal device.

The second indication information may include the power headroom report (power headroom report, PHR) of the SRS transmission occasion $m$.

The power headroom report of the SRS transmission occasion $m$ may be used to determine the path loss information associated with the transmit power of the SRS transmission occasion $n$; or the power headroom report of the SRS transmission occasion $m$ may be used to determine the transmit power of the SRS transmission occasion $n$, where $m$ and $n$ are integers, and $n$ is greater than $m$.

For example, the first terminal device may determine the power headroom report of the SRS transmission occasion $m$ according to the following formula:

$$PH_{type3,b,f,c}(m,q_s)=P_{CMAX,f,c}(m)-\left\{P_{O\_SRS,b,f,c}(q_s)+10log_{10}\left(2^{\mu}\cdot M_{SRS,b,f,c}(m)\right)+\alpha_{SRS,b,f,c}(q_s)\cdot PL_{b,f,c}(q_d)+h_{b,f,c}(m)\right\},$$

where
$PH_{type3,b,f,c}(m,q_s)$ represents the power headroom report of the SRS transmission occasion $m$. For other parameters, refer to the related descriptions of the formula for calculating the transmit power of the SRS transmission occasion $m$ in step 1001.

Step 1005: The second terminal device sends third indication information to the first network device, and correspondingly, the first network device receives the third indication information from the second terminal device.

The third indication information may include the CLI measurement result of the SRS.

For example, the CLI measurement result may be RSRP of the SRS (or described as SRS-RSRP).

When the second terminal device and the first terminal device belong to different network devices, as shown in step 1005a and step 1005b in FIG. 10, the second terminal device may send, to a serving network device of the second terminal device (for example, a second network device), the third indication information including the CLI measurement result of the SRS, and the second network device sends the received third indication information to the first network device. Alternatively, the second terminal device may send the third indication information to the first network device through a relay device.

Alternatively, when the second terminal device and the first terminal device belong to a same network device (namely, the first network device), as shown in step 1005c in FIG. 10, the second terminal device may directly send, to the first network device, the third indication information including the CLI measurement result of the SRS.

Optionally, a reporting manner of the CLI measurement result may include periodic reporting, aperiodic reporting, semi-persistent reporting, event-triggered reporting, and the like. This is not limited.

For event-triggered reporting, for example, when the CLI measurement result exceeds a specific threshold, reporting of the CLI measurement result may be triggered; or otherwise, the CLI measurement result is not reported. The threshold may be predefined or configured by a network, and is not limited.

Optionally, the CLI measurement result may be reported at an L1/L2 level, that is, reported through a PUCCH/PUSCH by multiplexing a CSI reporting process, or may be reported at an L3 level, that is, reported by using a radio resource management (radio resource management, RRM) measurement reporting process. L3 filtering needs to be performed for L3 level reporting, and a filtering coefficient may be configured by the network.

It should be noted that, in the method shown in FIG. 10, a sequence of performing step 1003 and step 1004 is not limited. Step 1003 may be performed before step 1004, or step 1004 may be performed before step 1003, or step 1003 and step 1004 are performed at the same time. Similarly, a sequence of performing step 1004 and step 1005 is not limited. Step 1004 may be performed before step 1005, or step 1005 may be performed before step 1004, or step 1004 and step 1005 are performed at the same time. This is not limited.

Based on the method shown in FIG. 10, the first network device may obtain the power headroom report of the SRS transmission occasion $m$ and the CLI measurement result of the SRS, and may determine, based on the following first possible design, the path loss information associated with the transmit power of the SRS transmission occasion $n$, or determine the transmit power of the SRS transmission occasion $n$ based on the following second possible design.

Optionally, the CLI measurement result used to calculate the transmit power of the SRS transmission occasion $n$ or the path loss information associated with the transmit power of the SRS transmission occasion $n$ may be CLI measurement results of one or more SRSs before the transmission occasion $n$, or may be an average value of CLI measurement results of a plurality of SRSs before the transmission occasion $n$. This is not limited.

In the first possible design, the first network device determines, based on the power headroom report of the SRS transmission occasion $m$ and the CLI measurement result of the SRS, the path loss information associated with the transmit power of the SRS transmission occasion $n$.

For example, the first network device may determine, according to the following formulas, the path loss information associated with the transmit power of the SRS transmission occasion $n$:

$$Pathloss = P_{TX} - P_{RX} \ \left[ dB \right];$$

and

$$P_{TX} = \begin{cases} P_{CMAX,f,c}, & PHR \leq 0 \\ P_{CMAX,f,c} - PHR, & PHR > 0 \end{cases},$$

where

$Pathloss$ represents the path loss information, $P_{TX}$ represents the transmit power of the SRS transmission occasion $m$ of the first terminal device, $P_{CMAX,f,c}$ represents the maximum output power of the first terminal device, PHR represents the power headroom report of the SRS transmission occasion $m$, and $P_{RX}$ represents the CLI measurement result of the SRS.

Optionally, the first indication information including the path loss information may be located in a path loss information indication field. A length of the indication field may be predefined in a communication protocol or configured by a network. This is not limited.

For example, the path loss information may include a path loss value; or the path loss information may include a path loss value range; or the path loss information may include an index of a path loss value; or the path loss information may include an index of a path loss value range.

Optionally, the path loss information is within a preset path loss range, and the preset path loss range may be predefined in a communication protocol, or may be configured by a network. This is not limited.

Optionally, if the path loss information calculated by the first network device is within the preset path loss range, the first network device adds the calculated path loss information to the first indication information, and sends the first indication information to the first terminal device. If the path loss information calculated by the first network device is beyond the preset path loss range, the first network device may add a minimum value of the preset path loss range to the first indication information, and send the first indication information to the first terminal device.

For example, a lower limit of the preset path loss range is X, and X may not be greater than 60 dB, for example, 45 dB, 40 dB, or 35 dB. An upper limit of the preset path loss range is Y, and Y may not be less than 80 dB, for example, 150 dB, 170 dB, or 180 dB.

Optionally, when the first network device indicates the path loss information to the first terminal device, an indicated step may be 1 dB or greater than 1 dB, for example, an integer multiple step such as 2 dB or 3 dB. The step may be predefined in a protocol or configured by a network. This is not limited.

Optionally, a candidate path loss value range may be quantized into X levels, and a step of each level is Y dB. In this case, the path loss information indication field may include $\lceil \log2(X) \rceil$ bits. When indicating the path loss information to the first terminal device, the first network device may send, to the first terminal device, a level corresponding to the path loss value range (that is, the index of the path loss value range).

For example, the candidate path loss value range is [70 dB, 169 dB]. Assuming that the step is 2 dB, the candidate path loss value range may be divided into 50 levels shown in Table 1, and a total of 6 bits are required for indication, that is, the path loss information indication field may include 6 bits.

Table 1

| Level 1 | [70 dB, 72 dB] |
|---|---|
| Level 2 | [72 dB, 74 dB] |
| ... | |
| Level 50 | [167 dB, 169 dB] |

In the second possible design, the first network device determines the transmit power of the SRS transmission occasion *n* based on the power headroom report of the SRS transmission occasion *m* and the CLI measurement result of the SRS.

The first network device may determine, based on the power headroom report of the SRS transmission occasion *m* and the CLI measurement result of the SRS, the path loss information associated with the transmit power of the SRS transmission occasion *n*, and determine the transmit power of the SRS transmission occasion *n* based on the path loss information.

For example, the first network device may determine the transmit power of the SRS transmission occasion *n* according to the following formula:

$$P_{SRS,b,f,c}\left(n,q_s,l\right)=min\left\{\begin{array}{c}P_{CMAX,f,c}\left(n\right)\\P_{O\_SRS,b,f,c}\left(q_s\right)+10\,log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)+h_{b,f,c}\left(n,l\right)\end{array}\right\},$$

where

$P_{SRS,b,f,c}(n,q_s,l)$ represents the transmit power of the SRS transmission occasion *n, min* represents a minimum value, $P_{CMAX,f,c}(n)$ represents the maximum output power of the first terminal device, $P_{O\_SRS,b,f,c}(q_s)$ represents expected receive power that is configured by the first network device and that is on the active uplink bandwidth part *b* of the carrier *f* of the serving cell *c, $q_s$* represents an index of an SRS resource set to which the SRS belongs (which indicates that $P_{O\_SRS,b,f,c}$ is configured for each SRS resource set), $M_{SRS,b,f,c}(n)$ represents an SRS transmission bandwidth (expressed in a quantity of resource blocks (resource block, RB)) that is configured by the first network device and that is on the SRS transmission occasion *n* on the active uplink bandwidth part *b* of the carrier *f* of the serving cell *c, $\alpha_{SRS,b,f,c}(q_s)$* represents a path loss compensation coefficient that is configured by the first network device and that is on the active uplink bandwidth part *b* of the carrier *f* of the serving cell *c, $q_s$* represents an index of an SRS resource set to which the SRS belongs (which indicates that $\alpha_{SRS,b,f,c}$ is configured for each SRS resource set), $PL_{b,f,c}(q_d)$ represents path loss information determined by the first network device, and $h_{b,f,c}(n,l)$ represents a power control adjustment state associated with the SRS.

Optionally, because the first network device directly indicates, to the first terminal device, the transmit power of the SRS transmission occasion *n* or the path loss information associated with the transmit power of the SRS transmission occasion *n*, the first network device may not need to indicate the power control adjustment state to the first terminal device, to reduce signaling overheads. In other words, a value of the power control adjustment state associated with the SRS may be 0. Alternatively, the first network device may determine the transmit power of the SRS transmission occasion *n* according to the following formula:

$$P_{SRS,b,f,c}\left(n,q_s,l\right)=min\left\{\begin{array}{c}P_{CMAX,f,c}\left(n\right)\\P_{O\_SRS,b,f,c}\left(q_s\right)+10\,log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)\end{array}\right\}.$$

For example, the first indication information may include a transmit power value of the SRS, or the first indication information may include an index of a transmit power value of the SRS.

Optionally, the transmit power of the SRS indicated by the first network device to the first terminal device by using the first indication information is less than or equal to the maximum output power of the first terminal device.

If the transmit power of the SRS calculated by the first network device is less than or equal to the maximum output power of the first terminal device, the first network device may add the calculated transmit power of the SRS to the first indication information, and send the first indication information to the first terminal device. If the transmit power of the SRS calculated by the first network device is greater than the maximum output power of the first terminal device, the first network device may use the maximum output power as the transmit power of the SRS, add the transmit power of the SRS to the first indication information, and send the first indication information to the first terminal device.

Step 902: The first network device sends the first indication information to the first terminal device, and correspondingly, the first terminal device receives the first indication information from the first network device.

The first indication information may include the path loss information associated with the SRS, and the path loss information is used by the first terminal device to determine the transmit power of the SRS, or the first indication information may include the transmit power of the SRS.

For example, the first indication information may be located in one or more of the following signaling: SIB signaling, RRC signaling, medium access control control (medium access control control element, MAC CE) signaling, or DCI signaling. That is, the first network device may semi-statically indicate the first indication information by using higher layer signaling such as the RRC signaling or the MAC CE signaling, or may dynamically indicate the first indication information by using the DCI.

The DCI signaling may be unicast DCI (unicast DCI), or may be a terminal device group common DCI (UE group common DCI). This is not limited.

In a first possible design, when the first indication information includes the path loss information associated with the SRS, the first terminal device may determine the transmit power of the SRS based on the path loss information.

For example, the first terminal device may determine the transmit power of the SRS transmission occasion $n$ according to the following formula:

$$P_{SRS,b,f,c}\left(n,q_s,l\right)=min\left\{\begin{array}{c}P_{CMAX,f,c}\left(n\right)\\P_{O\_SRS,b,f,c}\left(q_s\right)+10log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)+h_{b,f,c}\left(n,l\right)\end{array}\right\},$$

where

$PL_{b,f,c}(q_d)$ represents the path loss information included in the first indication information, and $h_{b,f,c}(n,l)$ represents the power control adjustment state associated with the SRS.

Optionally, because the first network device directly indicates, to the first terminal device, the path loss information associated with the transmit power of the SRS transmission occasion $n$, the first network device may not need to indicate the power control adjustment state to the first terminal device, to reduce signaling overheads. In other words, a value of the power control adjustment state associated with the SRS may be 0. Alternatively, the first terminal device may determine the transmit power of the SRS transmission occasion $n$ according to the following formula:

$$P_{SRS,b,f,c}\left(n,q_s,l\right)=min\left\{\begin{array}{c}P_{CMAX,f,c}\left(n\right)\\P_{O\_SRS,b,f,c}\left(q_s\right)+10log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)\end{array}\right\}.$$

In a second possible design, when the first indication information includes the transmit power of the SRS, the first terminal device may directly determine the transmit power of the SRS based on the first indication information.

In the foregoing two possible designs, optionally, the transmit power of the SRS determined by the first terminal device is less than or equal to the maximum output power of the first terminal device.

If the transmit power of the SRS calculated by the first terminal device is less than or equal to the maximum output power of the first terminal device, the first terminal device may use the calculated transmit power of the SRS as the transmit power of the SRS. If the transmit power of the SRS calculated by the first terminal device is greater than the maximum output power of the first terminal device, the first terminal device may use the maximum output power as the transmit power of the SRS.

If the transmit power of the SRS indicated by the first network device is less than or equal to the maximum output power of the first terminal device, the first terminal device may use the transmit power of the SRS indicated by the first network device as the transmit power of the SRS. If the transmit power of the SRS indicated by the first network device is greater than the maximum output power of the first terminal device, the first terminal device may use the maximum output power as the transmit power of the SRS.

Step 903: The first terminal device sends the SRS based on the transmit power determined based on the first indication information.

The first terminal device may determine the transmit power of the SRS based on the first indication information, and send the SRS.

Based on the method shown in FIG. 9, compared with a manner in which the first terminal device determines transmit power of the SRS based on a downlink reference signal sent by the first network device, a manner of determining the transmit power of the SRS based on the first indication information sent by the first network device can reduce the transmit power of the SRS, thereby reducing impact of an interfering terminal device on an interfered terminal device, ensuring normal operation of the interfered terminal device, enabling CLI measurement between terminal devices, and improving system performance and efficiency.

Optionally, based on the method shown in FIG. 9, when the first terminal device sends the initial SRS, the first network device has not indicated, to the first terminal device by using the first indication information, the path loss information or the transmit power associated with the SRS. In this case, the first terminal device may calculate, with reference to the method shown in step 1001, the path loss information based on the downlink reference signal sent by the first network device, to determine the transmit power of the SRS.

After the first terminal device sends the SRS at least once, the first network device may determine the first indication information with reference to the method shown in FIG. 9, and send the first indication information to the first terminal device. Subsequently, the first terminal device may determine the transmit power of the SRS based on the first indication information sent by the first network device, and send the SRS.

It should be noted that the solution in step 1001 in which the first network device configures the maximum output power for the first terminal device may be implemented with reference to the solution shown in FIG. 9, or may be implemented independently of the solution shown in FIG. 9. This is not limited.

It may be understood that, in embodiments of this application, an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all operations in embodiments of this application need to be performed.

The foregoing mainly describes the solutions provided in embodiments of this application from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more than two functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used.

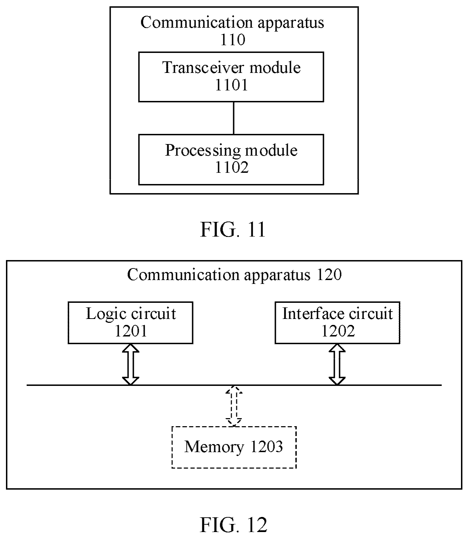

When each functional module is obtained through division based on each corresponding function, FIG. 11 shows a communication apparatus 110. The communication apparatus 110 may perform actions performed by the first terminal device, the second terminal device, the first network device, or the second network device in the methods shown in FIG. 9 and FIG. 10. All related content of steps in the foregoing method embodiments may be referenced to function descriptions of corresponding functional modules. For technical effects that can be obtained by the communication apparatus 110, refer to the foregoing method embodiments. Details are not described herein.

The communication apparatus 110 may include a transceiver module 1101 and a processing module 1102. For example, the communication apparatus 110 may be a communication device, or may be a chip used in the communication device, or another combined device or component that has a function of the communication apparatus. When the communication apparatus 110 is a communication device, the transceiver module 1101 may be a transceiver, where the transceiver may include an antenna, a radio frequency circuit, and the like; and the processing module 1102 may be a processor (or a processing circuit), for example, a baseband processor, where the baseband processor may include one or more CPUs. When the communication apparatus 110 is a component that has a function of the communication apparatus, the transceiver module 1101 may be a radio frequency unit, and the processing module 1102 may be a processor (or a processing circuit), for example, a baseband processor. When the communication apparatus 110 is a chip system, the transceiver module 1101 may be an input/output interface of a chip (for example, a baseband chip), and the processing module 1102 may be a processor (or a processing circuit) of the chip system, and may include one or more central processing units. It should be understood that, in embodiments of this application, the transceiver module 1101 may be implemented by the transceiver or a transceiver-related circuit component, and the processing module 1102 may be implemented by the processor or a processor-related circuit component (or referred to as a processing circuit).

For example, the transceiver module 1101 may be configured to perform all sending and receiving operations performed by the communication apparatus in the embodiments shown in FIG. 9 and FIG. 10, and/or configured to support another process of the technology described in this specification. The processing module 1102 may be configured to perform all operations other than sending and receiving operations performed by the communication apparatus in the embodiments shown in FIG. 9 and FIG. 10, and/or configured to support another process of the technology described in this specification.

In another possible implementation, the transceiver module 1101 in FIG. 11 may be replaced with a transceiver, and a function of the transceiver module 1101 may be integrated into the transceiver. The processing module 1102 may be replaced with a processor, and a function of the processing module 1102 may be integrated into the processor. Further, the communication apparatus 110 shown in FIG. 11 may further include a memory.

Alternatively, when the processing module 1102 is replaced with a processor, and the transceiver module 1101 is replaced with a transceiver, the communication apparatus 110 in embodiments of this application may be a communication apparatus 120 shown in FIG. 12. The processor may be a logic circuit 1201, and the transceiver may be an interface circuit 1202. Further, the communication apparatus 120 shown in FIG. 12 may further include a memory 1203.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or memory of the terminal. The computer-readable storage medium may alternatively be an external storage device of the foregoing terminal, for example, a plug-connected hard disk drive, a smart media card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the description of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more. "A plurality of" refers to two or more than two. "At least two (items) "means two, three, or more than three. "And/or" is used to describe an association relationship between associated objects, and indicates that three relationships may exist. For example, "A and/or B" may indicate three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. Both "when ..." and "if' mean that corresponding processing is performed in an objective case, are not intended to limit time, do not require a determining action during implementation, and do not mean that there is another limitation.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the units or the modules is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions of embodiments of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

**Claims**

1.   A communication method, comprising:

   receiving, by a first terminal device, first indication information from a first network device, wherein the first indication information comprises path loss information associated with a sounding reference signal SRS, and the path loss information is used by the first terminal device to determine transmit power of the SRS, or the first indication information comprises transmit power of the SRS; and
   sending, by the first terminal device, the SRS based on the transmit power determined based on the first indication information.

2.   The method according to claim 1, wherein

   the path loss information comprises a path loss value; or
   the path loss information comprises a path loss value range; or
   the path loss information comprises an index of a path loss value; or
   the path loss information comprises an index of a path loss value range.

3.   The method according to claim 2, wherein the method further comprises:
   sending, by the first terminal device, second indication information to the first network device, wherein the second indication information comprises a power headroom report of an SRS transmission occasion $m$, and $m$ is an integer.

4.   The method according to claim 3, wherein

   the power headroom report of the SRS transmission occasion $m$ is used to determine path loss information associated with transmit power of an SRS transmission occasion $n$; or
   the power headroom report of the SRS transmission occasion $m$ is used to determine transmit power of an SRS transmission occasion $n$, wherein
   $n$ is an integer, and $n$ is greater than $m$.

5.   The method according to any one of claims 1 to 4, wherein the method further comprises:
   receiving, by the first terminal device, first maximum transmit power and/or second maximum transmit power from the first network device, wherein the first maximum transmit power and/or the second maximum transmit power are/is used to determine maximum output power of the first terminal device, and the first maximum transmit power and the second maximum transmit power are associated with a same carrier of a same cell.

**6.** The method according to claim 5, wherein

receiving, by the first terminal device, the first maximum transmit power from the first network device, and determining, by the first terminal device, the maximum output power based on the first maximum transmit power; or

receiving, by the first terminal device, the first maximum transmit power and the second maximum transmit power from the first network device, and determining, by the first terminal device, the maximum output power based on the first maximum transmit power and the second maximum transmit power; or

receiving, by the first terminal device, the first maximum transmit power and the second maximum transmit power from the first network device, and determining, by the first terminal device, the maximum output power based on the first maximum transmit power.

**7.** The method according to claim 5 or 6, wherein

the first maximum transmit power is less than the second maximum transmit power, and the second maximum transmit power is located in an uplink frequency information signaling unit.

**8.** The method according to any one of claims 1 to 7, wherein

the first indication information is located in one or more of the following signaling: system information block SIB signaling, radio resource control RRC signaling, medium access control control element MAC CE signaling, or downlink control information DCI signaling.

**9.** The method according to any one of claims 1 to 8, wherein the transmit power of the SRS transmission occasion $n$ meets:

$$P_{SRS,b,f,c}\left(n,q_s,l\right)=min\left\{\begin{array}{c}P_{CMAX,f,c}\left(n\right)\\P_{O\_SRS,b,f,c}\left(q_s\right)+10log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)+h_{b,f,c}\left(n,l\right)\end{array}\right\},$$

wherein

$n$ is an integer, $P_{SRS,b,f,c}(n,q_s,l)$ represents the transmit power of the SRS transmission occasion $n$, $min$ represents a minimum value, $P_{CMAX,f,c}(n)$ represents the maximum output power, $P_{O\_SRS,b,f,c}(q_s)$ represents expected receive power on an active uplink bandwidth part $b$ of a carrier $f$ of a serving cell $c$, $q_s$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell $c$, $\alpha_{SRS,b,f,c}(q_s)$ represents a path loss compensation coefficient on the active uplink bandwidth part $b$ of the carrier $f$ of the serving cell $c$, $PL_{b,fc}(q_d)$ represents the path loss information, and $h_{b,f,c}(n,l)$ represents a power control adjustment state associated with the SRS, wherein a value of the power control adjustment state is 0.

**10.** The method according to any one of claims 1 to 8, wherein the transmit power of the SRS transmission occasion $n$ meets:

$$P_{SRS,b,f,c}\left(n,q_s,l\right)=min\left\{\begin{array}{c}P_{CMAX,f,c}\left(n\right)\\P_{O\_SRS,b,f,c}\left(q_s\right)+10log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)\end{array}\right\},$$

wherein

$n$ is an integer, $P_{SRS,b,f,c}(n,q_s,l)$ represents the transmit power of the SRS transmission occasion $n$, $min$ represents a minimum value, $P_{CMAX,f,c}(n)$ represents the maximum output power, $P_{O\_SRS,b,f,c}(q_s)$ represents expected receive power on an active uplink bandwidth part $b$ of a carrier $f$ of a serving cell $c$, $q_s$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell $c$, $\alpha_{SRS,b,f,c}(q_s)$ represents a path loss compensation coefficient on the active uplink bandwidth part $b$ of the carrier $f$ of the serving cell $c$, and $PL_{b,f,c}(q_d)$ represents the path loss information.

**11.** A communication method, comprising:

generating, by a first network device, first indication information, wherein the first indication information comprises path loss information associated with a sounding reference signal SRS, and the path loss information is used by a first terminal device to determine transmit power of the SRS, or the first indication information comprises transmit power of the SRS; and

sending, by the first network device, the first indication information to the first terminal device.

12. The method according to claim 11, wherein

the path loss information comprises a path loss value; or
the path loss information comprises a path loss value range; or
the path loss information comprises an index of a path loss value; or
the path loss information comprises an index of a path loss value range.

13. The method according to claim 11 or 12, wherein the method further comprises:
receiving, by the first network device, second indication information from the first terminal device, wherein the second indication information comprises a power headroom report of an SRS transmission occasion $m$, and $m$ is an integer.

14. The method according to any one of claims 11 to 13, wherein the method further comprises:
receiving, by the first network device, third indication information from a second terminal device, wherein the third indication information comprises a cross link interference CLI measurement result of the SRS.

15. The method according to claim 13 or 14, wherein generating, by the first network device, the first indication information comprises:

determining, by the first network device based on the power headroom report of the SRS transmission occasion $m$ and the CLI measurement result of the SRS, path loss information associated with transmit power of an SRS transmission occasion $n$; or
determining, by the first network device, transmit power of an SRS transmission occasion $n$ based on the power headroom report of the SRS transmission occasion $m$ and the CLI measurement result of the SRS, wherein $n$ is an integer, and $n$ is greater than $m$.

16. The method according to any one of claims 11 to 15, wherein the method further comprises:
sending, by the first network device, first maximum transmit power and/or second maximum transmit power to the first terminal device, wherein the first maximum transmit power and/or the second maximum transmit power are/is used to determine maximum output power of the first terminal device, and the first maximum transmit power and the second maximum transmit power are associated with a same carrier of a same cell.

17. The method according to claim 16, wherein

sending, by the first network device, the first maximum transmit power to the first terminal device, wherein the first maximum transmit power is used to determine the maximum output power; or
sending, by the first network device, the first maximum transmit power and the second maximum transmit power to the first terminal device, wherein the first maximum transmit power and the second maximum transmit power are used to determine the maximum output power; or
sending, by the first network device, the first maximum transmit power and the second maximum transmit power to the first terminal device, wherein the first maximum transmit power is used to determine the maximum output power.

18. The method according to claim 16 or 17, wherein
the first maximum transmit power is less than the second maximum transmit power, and the second maximum transmit power is located in an uplink frequency information signaling unit.

19. The method according to any one of claims 11 to 18, wherein
the first indication information is located in one or more of the following signaling: system information block SIB signaling, radio resource control RRC signaling, medium access control control element MAC CE signaling, or downlink control information DCI signaling.

20. The method according to any one of claims 11 to 19, wherein the transmit power of the SRS transmission occasion $n$ meets:

$$P_{SRS,b,f,c}\left(n,q_s,l\right)=min\left\{\begin{array}{c} P_{CMAX,f,c}\left(n\right) \\ P_{O\_SRS,b,f,c}\left(q_s\right)+10\,log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)+h_{b,f,c}\left(n,l\right)\end{array}\right\},$$

wherein

$n$ is an integer, $P_{SRS,b,f,c}(n,q_s,l)$ represents the transmit power of the SRS transmission occasion $n$, *min* represents a minimum value, $P_{CMAX,f,c}(n)$ represents the maximum output power, $P_{O\_SRS,b,f,c}(q_s)$ represents expected receive power on an active uplink bandwidth part $b$ of a carrier $f$ of a serving cell $c$, $q_s$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell $c$, $\alpha_{SRS,b,f,c}(q_s)$ represents a path loss compensation coefficient on the active uplink bandwidth part $b$ of the carrier $f$ of the serving cell $c$, $PL_{b,f,c}(q_d)$ represents the path loss information, and $h_{b,f,c}(n,l)$ represents a power control adjustment state associated with the SRS, wherein a value of the power control adjustment state is 0.

21. The method according to any one of claims 11 to 19, wherein the transmit power of the SRS transmission occasion $n$ meets:

$$P_{SRS,b,f,c}\left(n,q_s,l\right)=min\left\{\begin{array}{c} P_{CMAX,f,c}\left(n\right) \\ P_{O\_SRS,b,f,c}\left(q_s\right)+10\,log_{10}\left(2^{\mu}\cdot M_{SRS,b,f,c}\left(n\right)\right)+\alpha_{SRS,b,f,c}\left(q_s\right)\cdot PL_{b,f,c}\left(q_d\right)\end{array}\right\},$$

wherein

$n$ is an integer, $P_{SRS,b,f,c}(n,q_s,l)$ represents the transmit power of the SRS transmission occasion $n$, *min* represents a minimum value, $P_{CMAX,f,c}(n)$ represents the maximum output power, $P_{O\_SRS,b,f,c}(q_s)$ represents expected receive power on an active uplink bandwidth part $b$ of a carrier $f$ of a serving cell $c$, $q_s$ represents an index of an SRS resource set to which the SRS belongs, $M_{SRS,b,f,c}(n)$ represents an SRS transmission bandwidth of the SRS transmission occasion $n$ on the active uplink bandwidth part $b$ of the carrier $f$ of the serving cell $c$, $\alpha_{SRS,b,f,c}(q_s)$ represents a path loss compensation coefficient on the active uplink bandwidth part b of the carrier $f$ of the serving cell $c$, and $PL_{b,f,c}(q_d)$ represents the path loss information.

22. A communication apparatus, wherein the communication apparatus comprises a processor, and the processor is configured to run a computer program or instructions, to enable the communication apparatus to perform the communication method according to any one of claims 1 to 10 or the communication method according to any one of claims 11 to 21.

23. A computer-readable storage medium, wherein the computer-readable storage medium stores computer instructions or a program, and when the computer instructions or the program is run on a computer, the communication method according to any one of claims 1 to 10 or the communication method according to any one of claims 11 to 21 is enabled to be performed.

24. A computer program product, wherein the computer program product comprises computer instructions, and when a part or all of the computer instructions are run on a computer, the communication method according to any one of claims 1 to 10 or the communication method according to any one of claims 11 to 21 is enabled to be performed.

FIG. 1

FIG. 2

FIG. 3

FIG. 4

Communication system 100

Network
device 110

Terminal
device 105

Terminal
device 101

Terminal
device 102

Terminal
device 103

Terminal
device 106

Terminal
device 104

FIG. 5

Air interface
communication

| Terminal device | | Network device |

FIG. 6

Network
device 0

UL
signal

DL
signal

Terminal
device 0

Terminal
device 1

Frequency

XDD UL

| DL |
|----|
| UL |
| DL |

1CC

UL

XDD
system

Time

FIG. 7

800

801

807

Processor

CPU 0

CPU 1

Processor

CPU 0

CPU 1

804

Communication
line 803

Memory

802

805

806

Transceiver

Output device

Input device

FIG. 8

| First network device |

901: Generate first indication information

902: Send the first indication information

| First terminal device |

903: Send an SRS based on the first indication information

## FIG. 9

| First terminal device | First network device | Second network device | Second terminal device |

1000: Send configuration information of an SRS

1001: Determine transmit power of an SRS transmission occasion $m$

1001a: Send a downlink reference signal

1001b: Determine path loss information based on the downlink reference signal, and determine the transmit power of the SRS transmission occasion $m$ based on the path loss information

1002: Send the SRS on the transmission occasion $m$ based on the transmit power of the SRS transmission occasion $m$

1003: Perform CLI measurement on the SRS sent by the first terminal device, to obtain a CLI measurement result

1004: Send second indication information

1005: Send third indication information

1005b: Send the third indication information

1005a: Send the third indication information

1005c: Directly send the third indication information

## FIG. 10

30

Communication apparatus
110

Transceiver module
1101

Processing module
1102

FIG. 11

Communication apparatus 120

Logic circuit
1201

Interface circuit
1202

Memory 1203

FIG. 12

## INTERNATIONAL SEARCH REPORT

| International application No. |
|---|
| **PCT/CN2024/075842** |

| A. | CLASSIFICATION OF SUBJECT MATTER |
|---|---|

H04W 52/24(2009.01)i;  H04W 52/00(2009.01)i

According to International Patent Classification (IPC) or to both national classification and IPC

| B. | FIELDS SEARCHED |
|---|---|

Minimum documentation searched (classification system followed by classification symbols)

IPC:H04W,H04B

Documentation searched other than minimum documentation to the extent that such documents are included in the fields searched

Electronic data base consulted during the international search (name of data base and, where practicable, search terms used)

CNTXT: ENTXTC; DWPI; ENTXT; 3GPP: 路损, 路径损耗, 路径损失, 小区, 边缘, 大, 功率余量, 功率裕量, 功率裕度, 时机, 时间, 时刻, 时隙, SRS, pathloss, power, decreas+, cell, edge, PHR, time

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | WO 2021114055 A1 (HUAWEI TECHNOLOGIES CO., LTD.) 17 June 2021 (2021-06-17) claims 1-35, and description, page 14, line 23 to page 25, line 17 | 1-24 |
| A | CN 112399543 A (DATANG MOBILE COMMUNICATIONS EQUIPMENT CO., LTD.) 23 February 2021 (2021-02-23) entire document | 1-24 |
| A | WO 2014153745 A1 (FUJITSU LIMITED et al.) 02 October 2014 (2014-10-02) entire document | 1-24 |
| A | SAMSUNG. "Discussions on additional SRS symbols" 3GPP TSG RAN WG1 Meeting #95, R1-1812951, 16 November 2018 (2018-11-16), entire document | 1-24 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 May 2024** | **14 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/075842**

| Patent document cited in search report | | | Publication date (day/month/year) | Patent family member(s) | | | Publication date (day/month/year) |
|---|---|---|---|---|---|---|---|
| WO | 2021114055 | A1 | 17 June 2021 | CN | 114145049 | A | 04 March 2022 |
| CN | 112399543 | A | 23 February 2021 | WO | 2021027805 | A1 | 18 February 2021 |
| | | | | EP | 4017143 | A1 | 22 June 2022 |
| | | | | US | 2022295417 | A1 | 15 September 2022 |
| WO | 2014153745 | A1 | 02 October 2014 | CN | 104904280 | A | 09 September 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310182954